(19) Europäisches Patentamt
European Patent Office
Office européen des brevets

(11) EP 3 744 756 B1

(12) **EUROPÄISCHE PATENTSCHRIFT**

(45) Veröffentlichungstag und Bekanntmachung des Hinweises auf die Patenterteilung:
**03.07.2024 Patentblatt 2024/27**

(21) Anmeldenummer: **19176876.1**

(22) Anmeldetag: **28.05.2019**

(51) Internationale Patentklassifikation (IPC):
***C08G 77/14*** *(2006.01)* ***C08K 5/09*** *(2006.01)*
***C08L 83/04*** *(2006.01)* ***C08L 83/06*** *(2006.01)*
***C08K 5/549*** *(2006.01)*

(52) Gemeinsame Patentklassifikation (CPC):
(C-Sets verfügbar)
**C08G 77/14; C08K 5/09; C08K 5/549; C08L 83/04; C08L 83/06;** C08G 77/045; C08G 77/16;
C08G 77/18 (Forts.)

(54) **ACETOXYSYSTEME**

ACETOXY SYSTEMS

SYSTÈMES ACÉTOXY

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**02.12.2020 Patentblatt 2020/49**

(73) Patentinhaber: **Evonik Operations GmbH**
**45128 Essen (DE)**

(72) Erfinder:
- **KNOTT, Wilfried**
  **45355 Essen (DE)**
- **DUDZIK, Horst**
  **45326 Essen (DE)**
- **FAVRESSE, Philippe**
  **40880 Ratingen (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(56) Entgegenhaltungen:
**EP-A2- 0 453 882**
**CA-A- 1 125 780**
**JP-A- H11 217 389**
**US-A- 4 066 680**

EP 3 744 756 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

C-Sets
**C08K 5/09, C08L 83/04;**
**C08K 5/09, C08L 83/06;**
**C08K 5/549, C08L 83/06**

## Beschreibung

Die Erfindung betrifft Acetoxysysteme und deren Verwendung insbesondere zur Herstellung endäquilibrierter Acetoxygruppen tragender Siloxane mit Kettenlängen größer als 3 Siliziumatome sowie deren Verwendung zur Herstellung SiOC-basierter Siliziumverbindungen, insbesondere zur Herstellung SiOC-basierter Polyethersiloxane.

Die DE 1039516 (Bailey et al.) lehrt ein Verfahren zur Herstellung von kurzkettigen Acyloxysiliciumverbindungen der Formel $X[RXSiO]_nSiX_2R$, wobei n eine ganze Zahl von 0 bis 2, R eine Alkylgruppe und X eine Alkyl- oder Acyloxygruppe darstellt und wenigstens eine mit X bezeichnete Gruppe eine Acyloxygruppe ist, das darauf beruht, dass man ein Gemisch aus einem Alkylpolysiloxan und einer aliphatischen oder aromatischen Monocarbonsäure mit 1 bis 18 Kohlenstoffatomen oder deren Anhydrid in Gegenwart eines sauren Katalysators auf 50 bis 235'C, insbesondere auf 100 bis 200°C, erhitzt und das gebildete Wasser kontinuierlich aus dem Reaktionsgemisch entfernt.

Während die Lehre der DE 1039516 (Bailey et al.) darauf abstellt, dass die verwendete Menge der Monocarbonsäure nicht kritisch sei und in einem Bereich von 1,0 bis 5 Mol pro Grammatom des im Alkylsiloxan gebundenen Siliziums eingesetzt werden kann und dass an die Stelle aller oder eines Teils der Monocarbonsäure die äquivalente Menge des entsprechenden Säureanhydrids verwendet werden kann, wurde im Rahmen vorliegender Erfindung überraschenderweise festgestellt, dass die Menge eingesetzter Monocarbonsäure, insbesondere Essigsäure, wider Erwarten sogar von entscheidender Bedeutung für die erzielbare Qualität des angestrebten Acetoxygruppen-tragenden Siloxans mit Kettenlängen größer 3 Siliziumatomen ist. Wie Nachstellexperimente zu DE 1039516 zeigen, kann man durch die Umsetzung von Alkylpolysiloxanen wie zum Beispiel Dekamethylcyclopentasiloxan mit Essigsäureanhydrid in Gegenwart eines sauren Katalysators wie zum Beispiel konzentrierter Schwefelsäure zu Acetoxygruppen tragenden, linearen Polydimethylsiloxanen gelangen. Diese $\alpha,\omega$-Diacetoxypolydimethylsiloxane haben jedoch noch nicht den endäquilibrierten Zustand erlangt. Andererseits weisen solche Nachstellexperimente auch darauf hin, dass die von Bailey et al. in der DE 1039516 ausgelobte Umsetzung von Alkylpolysiloxanen wie zum Beispiel Dekamethylcyclopentasiloxan mit Essigsäure in Gegenwart eines sauren Katalysators wie zum Beispiel konzentrierter Schwefelsäure noch nicht einmal zu Acetoxygruppen-tragenden Polydimethylsiloxanen führt.

Bailey's Lehre öffnet nicht den Weg zu strukturdefinierten, endäquilibrierten Acetoxygruppen aufweisenden Siloxanen.

US4066680A offenbart ein Verfahren zur Herstellung von $\alpha,\omega$-Siloxandiolen aus $\alpha,\omega$-Diacetoxysiloxanen als Zwischenprodukt. Die $\alpha,\omega$-Diacetoxysiloxane werden durch Reaktion cyclischer Siloxane, Siloxandiole oder Diacyloxysiloxane mit Acetanhydrid, Essigsäure und säureaktiviertem Ton unter Rückfluss hergestellt.

Im Rahmen umfangreicher Untersuchungen konnten die Erfinder finden, dass es darauf ankommt, in der wenigstens aus Siloxanrohstoff(en), Acetanhydrid, Essigsäure und Brönstedtsäure bestehenden Reaktionsmatrix ein bestimmtes molares Mengenverhältnis von Brönstedtsäure zu Essigsäure einzustellen, dass es erlaubt, nicht nur eine Acetoxyfunktionalisierung am Silizium, sondern darüber hinaus auch noch die angestrebte Endäquilibrierung des entstandenen Acetoxysiloxans zu gewährleisten.

In diesem Zusammenhang wurde erfindungsgemäß in völlig überraschender Weise gefunden, dass man abseits der z.B. in den europäischen Patentanmeldungen EP3611215 A1 und EP3492513 A1 vertretenen Lehren, die auf die Verwendung von Trifluormethansulfonsäure in Kombination mit Essigsäure in Reaktionssystemen, die zudem noch Siloxanzyklen und/ oder hydroxyfunktionelle Siloxane umfassen, abstellen, auch deutlich schwächere Brönstedtsäuren als die Trifluormethansulfonsäure (pKa = -13,6) zur Gewinnung endäquilibrierter Acetoxygruppen-tragender Siloxane einsetzen kann.

Ohne an irgendeine Theorie gebunden zu sein, wird angenommen, dass die Brönstedtsäure erst in Essigsäure als nichtwässrigem Elektrolyten gelöst, die zum Erreichen der angestrebten Endäquilibrierung notwendige Systemacidität erlangt, die ihr allein aus ihrer Stellung in der Hammetschen Säurestärkenreihe heraus nicht zukäme. Es wird vermutet, dass erfindungsgemäß ein Acetat-Acidium-Ion $CH_3C(OH)_2^+$ gebildet wird, dessen Existenz an anderer Stelle durch die Charakterisierung seiner Kristallstruktur in Form des Hexafluoroantimonats $CH_3C(OH)_2^+SbF_6^-$ nachgewiesen wurde (R. Minkwitz, T. Hertel, Z. Naturforsch. B, Bd. 52 (10), S. 1283-1286). Insofern ist die Hammetsche Säurestärke der erfindungsgemäß verwendeten starken Brönstedtsäure ausgedrückt als pKs-Wert (oder englisch pKa-Wert) ein zum Erreichen der erfindungsgemäß angestrebten Äquilibrierung, Endäquilibrierung notwendiger, jedoch noch keinesfalls hinreichender Parameter.

Die Erfinder gehen davon, dass die im wasserfreien Acetylierungssystem katalytisch wirksame Säure immer das Acetat-Acidium-Ion $CH_3C(OH)_2^+$ ist, was sich wohl daraus erklärt, dass das wasserfreie Acetylierungssystem die Existenz keiner stärkeren Säure zulässt. Weiterhin wurde gefunden, dass der pKa-Wert der eingesetzten Brönstedtsäure ein wichtiger Parameter für die Bildung dieser protonierten Essigsäure ist. Das aus der Protonierung der Essigsäure mit einer Brönstedtsäure hervorgehende ionenpaar enthält somit stets das Anion $B^-$ der Brönstedtsäure.

$$HB + CH_3\text{-}COOH \underset{}{\overset{K_1}{\rightleftharpoons}} \left\{ CH_3\text{-}C(OH)_2^+ \; B^- \right\}$$

$$\left\{ CH_3\text{-}C(OH)_2^+ \; B^- \right\} \overset{K_2}{\rightleftharpoons} CH_3\text{-}C(OH)_2^+ + B^-$$

mit HB = Brönstedtsäure

Die Erfinder gehen davon aus, dass die beobachtete katalytische Aktivität eine Funktion des Dissoziationsgrades dieses (Acetat-Acidiumkation-Brönstedtsäureanion)-Ionenpaares ist. Wie kompliziert die Verhältnisse bei der Prognose systemischer Acidität In Essigsäure-Brönstedtsäure-Systemen bedingt durch die Verknüpfung einer Protonentransferreaktion von der Brönstedtsäure auf Essigsäure und dann der nachgelagerten Dissoziation des so gebildeten Ionenpaares liegen, verdeutlichen sowohl S. Bruckenstein und I. M. Kolthoff in J. Am. Chem. Soc. 78, 1 und ibid. 10 (1956) an Hand ihrer Untersuchungen von Säure-Base-Gleichgewichten in Eisessig als auch G. W. Ceska und E. Grunwald in J. Am. Chem. Soc. 89, 1371 und ibid. 1377 (1967), die Gleichgewichtskonstanten und Substituenteneffekte unter anderem von substituierten Aniliniumacetaten in Eisessig untersuchen.

Da man die Dissoziationskonstante $K_2$ des individuellen (Acetat-Acidiumkation-Brönstedt-säureanion)- Ionenpaares nicht kennt, bzw. akzeptieren muss, dass diese allenfalls nur schwierig zu bestimmen ist, wird im Rahmen der vorliegenden Erfindung vereinfachend angenommen, dass die für die beabsichtigte katalytische Wirksamkeit benötigte Mindestkonzentration an freiem Acetat-Acidiumkation in erster Linie bestimmt ist von der im Ionenpaar vorliegenden Konzentration gebundenen Acetat-Acidiumkations.

Da die im Ionenpaar vorliegende Konzentration gebundenen Acetat-Acidiumkations direkt abhängt von den Konzentrationen an Essigsäure, Brönstedtsäure und deren individuellen pKa-Wert, genügen dem Fachmann abseits aller hier angestellten Betrachtungen der physikalischen und theoretischen Chemie erfindungsgemäß somit nur wenige orientierende Handversuche, um ein geeignetes Katalysatorsystem bestehend aus Essigsäure und Brönstedtsäure zu identifizieren. Als im Rahmen der Erfindung geeignete Brönstedtsäuren, die die vorteilhafte Herstellung endäquilibrierter linearer als auch verzweigter Acetoxygruppen tragender Siloxane gestatten, sind insbesondere die folgenden zu nennen: Protonensäure mit einem pKa-Wert ≤ - 1,30, wie vorzugsweise Salpetersäure, Methansulfonsäure und/oder para-Toluolsulfonsäure, vorzugsweise Protonensäuren mit einem pKa-Wert ≤ - 2,90 wie vorzugsweise Schwefelsäure, besonders bevorzugt Protonensäuren mit einem pKa-Wert ≤ - 4,90 wie vorzugsweise die Perfluoralkansulfonsäuren, wie insbesondere Heptafluorpropansulfonsäure, Pentafluorethansulfonsäure, Perchlorsäure und/oder Chlorsulfonsäure, wobei unter diesen insbesondere Perfluoralkansulfonsäuren präferiert werden, sowie des Weiteren auch vorzugsweise sulfonsaure und/oder perfluoralkylsulfonsaure Ionenaustauscherharze, zum Beispiel in Form der kommerziell verfügbaren Typen Amberlyst® und Lewatit® aber auch in Form der perfluoralkylsulfonsauren Harze wie Nafion® (dabei zum Beispiel der Typ NR 50).

Der individuellen Säurestärke angemessen, sollte dann erfindungsgemäß bevorzugt, das molare Mengenverhältnis von eingesetzter Brönstedtsäure HB zu Essigsäure bei Brönstedtsäuren mit einem pKa-Wert ≤ -4,90 im Bereich von

$$1/30 \leq \frac{[HB]}{[CH_3\text{-}COOH]} \leq 1/3$$

und bei Brönstedtsäuren mit einem pKa-Wert ≤ - 1,30 und ≥ -4,80 im Bereich von

$$1/10 \leq \frac{[HB]}{[CH_3\text{-}COOH]} \leq 1$$

liegen.

Brönstedtsäuren mit einem pKa-Wert ≤ -4,90 werden im Sinne dieser Erfindung als Brönstedtsäuren der Kategorie A bezeichnet. Brönstedtsäuren mit einem pKa-Wert ≤ - 1,30 und ≥ 4,80 werden im Sinne dieser Erfindung als Brönstedtsäuren der Kategorie B bezeichnet.

Der Terminus "Brönstedtsäure" umfasst erfindungsgemäß die reinen Brönstedtsäuren, die einen pKa-Wert insbesondere zwischen ≤ - 1,3 und > -13,5 aufweisen, jedoch vorzugsweise auch geeignete Gemische derselben.

So ist erfindungsgemäß der alleinige Einsatz von Trifluormethansulfonsäure sowie von Trifluormethansulfonsäure und Essigsäure ausgenommen, jedoch ist es erfindungsgemäß sehr wohl bevorzugt, Mischungen der Trifluormethansulfonsäure mit anderen Brönstedtsäuren einzusetzen mit der Maßgabe, dass die dabei eingesetzte Bronstedtsäure zumindest anteilsweise einen pKa-Wert zwischen ≤ - 1,3 und > -13,5 aufweist.

Diese erfindungsgemäße Bevorzugung des Einsatzes von Mischungen der Trifluormethansulfonsäure erklärt sich auch aus der experimentellen Beobachtung, dass bei einem nahezu vergleichbaren molaren Mengenverhältnis von eingesetzter Brönstedtsäure HB zu Essigsäure wie etwa (0,24 vs 0,213) in den Beispielen 5 und 6, stets dasjenige System eine überragende Äquilibrierleistung zeigt, das anteilig die stärkere Brönstedtsäure, hier die Trifluormethansulfonsäure (aus dem Natriumtriflat stammend) neben der Methansulfonsäure (Beispiel 6) gegenüber der Schwefelsäure allein (Beispiel 5) beinhaltet.

Erfindungsgemäß bevorzugt werden Mischungen von Brönstedtsäuren der Kategorie A) und Kategorie B) als Brönstedtsäure HB im molaren Mengenverhältnis zu Essigsäure im Bereich von ≥ 1/30 und ≤ 1 eingesetzt.

Ebenfalls konnten die Erfinder finden, dass im erfindungsgemäßen Verfahren die Acetanhydridkonzentration im zur Herstellung endäquilibrierter Acetoxygruppen tragender Siloxane gewählten Reaktionssystem vorzugsweise so zu bemessen ist, dass zu jedem Zeitpunkt systemisch gebildetes Wasser in Essigsäure umgewandelt wird.

Wie Experimente überzeugend belegen, entfalten starke Brönstedtsäuren wie z. B. die Schwefelsäure (pKa-Wert = -3,0) und auch die als Supersäure betrachtete Trifluormethansulfonsäure (pKa-Wert = - 13,6, N. Gigant, Synlett, 2013, 24, 0399-0400) durch das erfindungsgemäße Hinzufügen einer gewissen Menge an Essigsäure die notwendige Systemacidität, um bereits innerhalb einer kurzen Reaktionszeit, wie z.B. 6 Stunden, das bevorzugte Ziel der Endäquilibrierung zu erreichen. Als Supersäuren werden gemeinhin Säuren betrachtet, die einen pKa-Wert = < - 3,0, das heißt kleiner als der pKa-Wert, der 100%iger Schwefelsäure zukommt, besitzen.

Mit dem Begriff "endäquilibriert" ist gemeint, dass das Äquilibriergleichgewicht erreicht worden ist, das sich bei einer Temperatur von 23°C und einem Druck von 1013,25 hPa einstellt. Als Indikator für das Erreichen des Äquilibriergleichgewichtes kann der gaschromatographisch bestimmte Gesamtcylengehalt definiert als die Summe der $D_4$-, $D_5$-, $D_6$-Gehalte bezogen auf die Siloxanmatrix und festgestellt nach der Derivatisierung der $\alpha,\omega$-Diacetoxypolydimethylsiloxane zu den entsprechenden $\alpha,\omega$-Diisopropoxypolydimethylsiloxanen bzw. nach der Derivatisierung der verzweigten Acetoxysiloxane zu den entsprechenden verzweigten Isopropoxysiloxanen herangezogen werden. Der erfindungsgemäße Einsatz der Essigsäure ermöglicht die problemlose Unterschreitung sonst üblicher Gleichgewichtsanteile von etwa 13 Gewichtsprozent des Gesamtcyclengehaltes bei den linearen $\alpha,\omega$-Diacetoxypolydimethylsiloxanen und von etwa 8 Gewichtsprozent des Gesamtcyclengehaltes bei den verzweigten Acetoxysiloxanen. Demzufolge entspricht es einer besonders bevorzugten Ausführungsform der vorliegenden Erfindung, wenn Gleichgewichtsanteile des Gesamtcyclengehaltes von kleiner 13, vorzugsweise kleiner 12 Gewichtsprozent bei den linearen $\alpha,\omega$-Diacetoxypoiydimethyisiioxanen und Gleichgewichtsanteile des Gesamtcyclengehaltes von kleiner 8, vorzugsweise kleiner 7 Gewichtsprozent bei den verzweigten Acetoxysiloxanen unterschritten werden. Die Derivatisierung zu den $\alpha,\omega$-Diisopropoxypolydimethylsiloxanen bzw. zu den verzweigten Isopropoxysiloxanen wird hierbei bewusst gewählt, um eine unter den Bedingungen der gaschromatographischen Analyse gegebenenfalls erfolgende, thermisch induzierte Rückspaltungsreaktion der $\alpha,\omega$-Diacetoxypolydimethylsiloxane bzw. der verzweigten Acetoxysiloxane zu verhindern (zur Rückspaltungsreaktion siehe u.a. J. Pola et al., Collect. Czech. Chem. Commun. 1974, 39(5), 1169-1176 und auch W. Simmler, Houben-Weyl, Methods of Organic Chemistry, Vol. VI/2, 4th Edition, O-Metal Derivates of Organic Hydroxy Compounds S. 162 ff)).

Die vorangestellten Erkenntnisse sind Bestandteil dieser Erfindung.

Der Hauptgegenstand dieser Erfindung ist ein Reaktionssystem zur Herstellung Acetoxyfunktionen tragender Siloxane mit Kettenlängen größer 3 Siliziumatomen, umfassend

a) Alkoxygruppen tragende Silane und/oder Siloxane und/oder
b) Acetoxygruppen tragende Silane und/oder Siloxane, und/oder
c) Hydroxygruppen tragende Silane und/oder Siloxane und/ oder
d) einfache Siloxanzyklen und/ oder DT-Zyklen,
sowie
e) ein Reaktionsmedium, umfassend Essigsäureanhydrid, Brönstedtsäure sowie Essigsäure,

wobei Brönstedtsäuren mit einem pKa-Wert ≤ -1,30, bevorzugt mit einem pKa-Wert ≤ -2,90, besonders bevorzugt mit einem pKa-Wert ≤ -4,90 eingesetzt werden, und wobei

die Essigsäure im Reaktionssystem in Mengen von 0,4 bis 15,0 Gewichtsprozent, vorzugsweise 0,5 bis 10,0 Gewichtsprozent, bevorzugt 0,8 bis 6,5 Gewichtsprozent, besonders bevorzugt in Mengen von 1,0 bis 6,0 Gewichtsprozent, bezogen auf das Reaktionssystem, enthalten ist,

wobei das molare Mengenverhältnis von eingesetzter Brönstedtsäure zu Essigsäure

bei Brönstedtsäuren der Kategorie A), welche einen pKa-Wert ≤ -4,90 aufweisen, im Bereich von ≥ 1/30 und ≤ 1/3 liegt und
bei Brönstedtsäuren der Kategorie B), welche einen pKa-Wert von ≤ - 1,30 bis ≥ - 4,80 aufweisen, im Bereich von ≥ 1/10 und ≤ 1 liegt und
bei Mischungen von Brönstedtsäuren der Kategorie A) und Kategorie B) im Bereich von ≥ 1/30 und ≤ 1 liegt,

mit der Maßgabe, dass (i) entweder der alleinige Einsatz von Trifluormethansulfonsäure sowie von Trifluormethansulfonsäure und Essigsäure ausgenommen ist, und/oder dass (ii) die eingesetzte Brönstedtsäure zumindest anteilsweise einen pKa-Wert zwischen ≤ - 1,3 und ≥ -13,5 aufweist.

Ausführliche Zusammenstellungen der $pK_a$-Werte von Brönstedtsäuren findet man in der Literatur und können dieser entnommen werden, z.B. CRC Handbook of Chemistry and Physics 99th edition aber auch in elektronischen Quellen wie zum Beispiel Evans pKa Table, evans.rc.fas.harvard.edu/pdf/evans_pKa_table.pdf. und "Das Periodensystem der Elemente online, pKs-Werte absteigend nach Wert sortiert", 2010-2019, ©René Rausch, Zur Bestimmung des pKa-Werts stehen außerdem die dem Fachmann bekannten Methoden zur Verfügung. Abseits von eventuell abweichend referenzierten pKa-Werten erweist sich die potentiometrische Titration als eine besonders geeignete Methode zur exakten Bestimmung von pKa-Werten im Sinne der vorliegenden Erfindung. Diese Methode ist lange etabliert, vgl. z.B. Benet L.Z., Goyan J.E.: Potentiometric determination of dissociation constants; J. Pharm. Sci. 56, 665-680 (1967).
Wenn Mischungen aus Brönstedtsäuren, wie vorzugsweise aus Brönstedtsäuren der Kategorie A mit Brönstedtsäuren der Kategorie B, eingesetzt werden, so liegt eine bevorzugte Ausführungsfrom der Erfindung vor. Dies trifft ebenso auf den Einsatz von Brönstedtsäuresalz-Brönstedtsäure-Kombinationen zu, der weiter unten genauer beschrieben wird.
Gemäß einer bevorzugten Ausführungsform der Erfindung zeichnet sich ein erfindungsgemäßes Reaktionssystem, vorgesehen zur Herstellung verzweigter terminale Acetoxyfunktionen tragender Siloxane, dadurch aus, dass ein Alkoxygruppen tragendes, mindestens eine T- und/ oder Q-Gruppe enthaltendes Silan und/oder Siloxan und/oder ein Acetoxygruppen tragendes, mindestens eine T- und/oder Q-Gruppe enthaltendes Silan/Siloxan, und/oder, DT-Zyklen eingesetzt werden.
Wenn im Rahmen der Erfindung Alkoxysilane eingesetzt werden, vorzugsweise Dimethyldialkoxysilane, Methyltrialkoxysilane und/oder ortho-Alkylkieselsäureester $Si(OR)_4$, mit R = Alkylrest, verzweigter Alkylrest oder Cycloalkylrest, mit 1 bis 10 Kohlenstoffatomen, vorzugsweise mit 1 bis 4, besonders bevorzugt R = Ethyl-, so liegt eine weitere bevorzugte Ausführungsform der Erfindung vor.
Wenn im Rahmen der Erfindung lineare und/oder verzweigte Alkoxysiloxane eingesetzt werden, vorzugsweise solche der Formel:

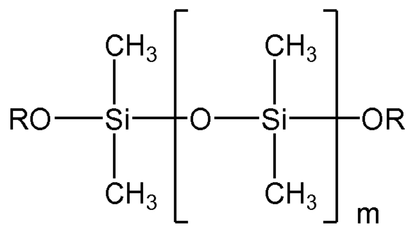

mit m = 1 bis 300, vorzugsweise 12 bis 150, besonders bevorzugt m = 20 bis 80, oder

$$CH_3SiD_aD_bD_c(OR)_3$$

oder

$$SiD_aD_bD_cD_d(OR)_4$$

mit a,b,c und d jeweils unabhängig voneinander 1 bis 100, vorzugsweise 2 bis 50, besonders bevorzugt 10 bis 30 und

R = Alkylrest, verzweigter Alkylrest, Cycloalkylrest mit 1 bis 10 Kohlenstoffatomen, vorzugsweise mit 1 bis 4, besonders bevorzugt R = Ethyl-, so liegt eine weitere bevorzugte Ausführungsform der Erfindung vor.

Wenn im Rahmen der Erfindung die eingesetzten Alkoxysiloxane aus saurer Äquilibrierung von Dimethyldialkoxysilanen oder Methyltrialkoxysilanen mit einfachen Siloxanzyklen (insbesondere umfassend $D_4$ und/oder $D_5$) resultieren, so liegt eine weitere bevorzugte Ausführungsform der Erfindung vor.

Wenn im Rahmen der Erfindung einfache Siloxanzyklen eingesetzt werden, insbesondere umfassend $D_3$ (Hexamethylcyclotrisiloxan), $D_4$ (Octamethylcyclotetrasiloxan), $D_5$ (Dekamethylcyclopentasiloxan) und/oder De (Dodekamethylcyclohexasiloxan), wobei $D_4$ und/oder $D_5$ besonders bevorzugt sind, und $D_5$ am meisten bevorzugt ist, so liegt eine weitere bevorzugte Ausführungsform der Erfindung vor.

Wenn im Rahmen der Erfindung hydroxyfunktionelle Silane und/ oder hydroxyfunktionelle Siloxane eingesetzt werden, vorzugsweise Dimethylsilanol $(CH_3)_2Si(OH)_2$, Methylsilanol ($CH_3Si(OH)_3$) und/oder ortho-Kieselsäure $Si(OH)_4$ und/ oder als hydroxyfunktionelle Siloxane vorzugsweise $\alpha,\omega$-Polydimethylsiloxandiole der folgenden Formel:

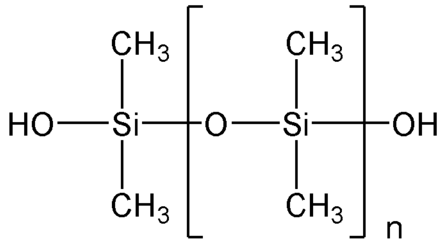

mit n = 1 bis 300, vorzugsweise n = 12 bis 150, besonders bevorzugt n = 20 bis 80 eingesetzt werden, so liegt eine weitere bevorzugte Ausführungsform der Erfindung vor.

Wenn im Rahmen der Erfindung zyklisch-verzweigte Siloxane vom DT-Typ eingesetzt werden, vorzugsweise

a) Mischungen zyklischer-verzweigter Siloxane vom D/T-Typ, die (vorzugsweise ausschließlich) aus D- und T-Einheiten aufweisenden Siloxanen bestehen und deren mit $^{29}$Si-NMR-Spektroskopie bestimmbarer summarischer Anteil der in der Siloxanmatrix vorhandenen D- und T-Einheiten, die Si-Alkoxy- und/oder SiOH-Gruppen aufweisen, $\leq$ 2 Molprozent, bevorzugt kleiner 1 Molprozent ist, und die bevorzugt zumindest 5 Gewichtsprozent Siloxancyclen, wie vorzugsweise Oktamethylcyclotetrasiloxan ($D_4$), Dekamethylcyclopentasiloxan ($D_5$) und/oder deren Mischungen enthalten oder aber

b) Mischungen zyklischer-verzweigter, (vorzugsweise ausschließlich) D- und T-Einheiten aufweisender Siloxane deren mit $^{29}$Si-NMR-Spektroskopie bestimmbarer summarischer Anteil der in der Siloxanmatrix vorhandenen D- und T-Einheiten, die Si-Alkoxy- und/oder SiOH-Gruppen aufweisen, größer 2 und kleiner 10 Molprozent sind,

so liegt eine weitere bevorzugte Ausführungsform der Erfindung vor.

Die Bereitstellung zyklisch-verzweigter Siloxane vom DT-Typ wird exemplarisch im Beispiel 1 dargelegt.

Die erfindungsgemäß besonders bevorzugt einzusetzende Brönstedtsäure ist eine Perfluoralkansulfonsäure, hierbei ausgenommen der alleinige Einsatz von Trifluormethansulfonsäure oder von Trifluormethansulfonsäure und Essigsäure.

Verfahrenstechnisch und wirtschaftlich ist es nicht bevorzugt, höhere Mengen an Essigsäure der aus Siloxanrohstoffen und Acetanhydrid bestehenden Reaktionsmatrix hinzuzufügen, da man diese spätestens bei der Weiterverarbeitung des gewonnenen Acetoxygruppen tragenden Siloxans auch wieder entfernen muss. Das erfindungsgemäße Verfahren ist somit dadurch gekennzeichnet, dass man Essigsäure in Mengen von 0,4 bis 15,0 Gewichtsprozent, vorzugsweise 0,5 bis 10,0 Gewichtsprozent, bevorzugt 0,8 bis 6,5 Gewichtsprozent, besonders bevorzugt in Mengen von 1,0 bis 6,0 Gewichtsprozent bezogen auf die Reaktionsmatrix umfassend Alkoxygruppen tragende Silane und/oder Siloxane und/oder Acetoxygruppen tragende Silane und/oder Siloxane, und/oder Hydroxygruppen tragende Silane und/oder Siloxane und/ oder gegebenenfalls einfache Siloxanzyklen und/ oder DT-Zyklen und Essigsäureanhydrid hinzufügt.

Gemäß einer bevorzugten Ausführungsform der Erfindung führt man die Umsetzung im Temperaturbereich von vorzugsweise 140 bis 160°C und in einem Zeitraum von 4 bis 8 Stunden durch.

Setzt man beispielsweise Dekamethylcyclopentasiloxan mit Essigsäureanhydrid 6 Stunden lang bei 150°C unter Hinzufügen von 1,5 Gewichtsprozent Essigsäure und 0,6 Gewichtsprozent konzentrierter Schwefelsäure um und derivatisiert danach das erhaltene $\alpha,\omega$-Diacetoxysiloxan zum $\alpha,\omega$-Diisopropoxysiloxan, so weist die daran durchgeführte gaschromatographische Analyse einen Gesamtcyclengehalt definiert als die Summe der $D_4$-, $D_5$-, $D_6$-Gehalte bezogen

auf die Siloxanmatrix von 59,6 Gewichtsprozent nach (Beispiel 5).

Werden hingegen Dekamethylcyclopentasiloxan und Essigsäureanhydrid 6 Stunden lang bei 150°C unter Hinzufügen von 6,0 Gewichtsprozent Essigsäure und 1,0 Gewichtsprozent konzentrierter Schwefelsäure umgesetzt und wird dann das erhaltene $\alpha,\omega$-Diacetoxysiloxan zum $\alpha,\omega$-Diisopropoxysiloxan derivatisiert, so weist die daran durchgeführte gaschromatographische Analyse einen Gesamtcyclengehalt definiert als die Summe der $D_4$-, $D_5$-, $D_6$-Gehalte bezogen auf die Siloxanmatrix von 10,3 Gewichtsprozent nach und belegt somit vollständige Äquilibrierung.

Ebenso ist es erfindungsgemäß auch möglich, die für die Erzielung des sauren Äquilibriermediums benötigte Essigsäuremenge zumindest anteilsweise in situ, das heißt, beispielsweise durch Reaktion eines Siloxanols, zum Beispiel eines $\alpha,\omega$-Siloxandiols mit einer bereits in der Reaktandeinwaage dafür vorgesehenen Menge an Acetanhydrid reagieren zu lassen, so dass die entsprechende Menge an Essigsäure entsteht. Dies entspricht einer besonders bevorzugten Ausführungsform der Erfindung.

Ersetzt man beispielsweise einen Teil des Dekamethylcyclopentasiloxans durch ein $\alpha,\omega$-Siloxan-diol, das als chemischer Wasserlieferant einen Teil des Acetanhydrids in Essigsäure umwandelt, so dass bezogen auf den Gesamtansatz 5,6 Gewichtsprozent Essigsäure und 0,6 Gewichtsprozent konzentrierter Schwefelsäure vorliegen und lässt dann 6 Stunden lang bei 150°C reagieren, so weist die nach anschließender Derivatisierung des erhaltenen $\alpha,\omega$-Diacetoxy-siloxans zum $\alpha,\omega$-Diisopropoxysiloxan durchgeführte gaschromatographische Analyse einen Gesamtcyclengehalt definiert als die Summe der $D_4$-, $D_5$-, $D_6$-Gehalte bezogen auf die Siloxanmatrix von 14,1 Gewichtsprozent nach.

Des Weiteren ist es erfindungsgemäß auch möglich und entspricht einer ganz besonders bevorzugten Ausführungsform der Erfindung, die für die Erzielung des sauren Äquilibriermediums benötigte Brönstedtsäure zumindest anteilsweise in situ bereitzustellen, also beispielsweise durch Reaktion von Natriumtriflat mit konzentrierter Schwefelsäure in der Reaktionsmatrix in situ bereitzustellen. Hierdurch gelangt man zu Trifluormethansulfonsäure-Schwefelsäure-Mischungen, die in diesem Fall dann die erfindungsgemäß verwendete Brönstedtsäure darstellen. Ebenfalls haben sich erfindungsgemäß auch Brönstedtsäuresalz-Brönstedtsäure-Kombinationen, wie vorzugsweise Aluminiumtriflat/ Methansulfonsäure, Bismutttriflat/ Methansulfonsäure und/oder Natriumtriflat/ Methansulfonsäure (vgl. auch Beispiel 6) besonders bewährt. Der Einsatz von Brönstedtsäuresalz-Brönstedtsäure-Kombinationen entspricht einer ganz besonders bevorzugten Ausführungsform der Erfindung. Im Rahmen dieser Erfindung ergeben sich somit für den Fachmann leicht nachvollziehbar eine Vielzahl möglicher, einsetzbarer Brönstedtsäuresalz-Brönstedtsäure-Kombinationen.

Ein erfindungsgemäßes Reaktionssystem, wobei die Brönstedtsäure hervorgeht aus der in-situ-Kombination einer Brönstedtsäure mit einem pKa-Wert $\leq$ -1,30, bevorzugt mit einem pKa-Wert $\leq$ -2,90, besonders bevorzugt mit einem pKa-Wert $\leq$ -4,90 mit dem Salz einer Brönstedtsäure, worin die darin enthaltenen Brönstedtsäure einen pKa-Wert $\leq$ -1,30, bevorzugt einen pKa-Wert $\leq$ -2,90, besonders bevorzugt einen pKa-Wert $\leq$ -4,90 aufweist, entspricht somit einer bevorzugten Ausführungsform der Erfindung.

Als Indikator für das Erreichen des Äquilibriergleichgewichtes wird der gaschromatographisch bestimmte Gesamtcylengehalt definiert als die Summe der $D_4$-, $D_5$-, $D_6$-Gehalte bezogen auf die Siloxanmatrix und festgestellt nach der Derivatisierung der verzweigten Acetoxygruppen tragenden Siloxane zu den entsprechenden verzweigten Isoproxygruppen tragenden Siloxanen beziehungsweise der $\alpha,\omega$-Diacetoxypolydimethylsiloxane zu den $\alpha,\omega$-Diisopropoxy-polydimethylsiloxanen herangezogen. Die Derivatisierung zu den verzweigten Isoproxygruppen tragenden Siloxanen beziehungsweise zu den $\alpha,\omega$-Diisopropoxy-polydimethylsiloxanen wird hierbei bewusst gewählt, um eine unter den Bedingungen der gaschromatographischen Analyse gegebenenfalls erfolgende, thermisch induzierte Rückspaltungsreaktion der verzweigten Acetoxygruppen tragenden Siloxane beziehungsweise der $\alpha,\omega$-Diacetoxy-polydimethylsiloxane zu verhindern (zur Rückspaltungsreaktion siehe u.a. J. Pola et al., Collect. Czech. Chem. Commun. 1974, 39(5), 1169-1176 und W. Simmler, Houben-Weyl, Methods of Organic Chemistry, Vol. VI/2, 4th Edition, O-Metal Derivates of Organic Hydroxy Compounds S. 162 ff)).

Ein weiterer Gegenstand der Erfindung ist ein Verfahren zur Herstellung Brönstedtsaurer, linearer oder verzweigter Acetoxyfunktionen tragender Siloxane mit Kettenlängen größer 3 Siliziumatomen, wobei

a) Alkoxygruppen tragende Silane und/oder Siloxane, und/oder
b) Acetoxygruppen tragende Silane und/oder Siloxane, und/oder
c) Hydroxygruppen tragende Silane und/oder Siloxane und/ oder
d) einfache Siloxanzyklen, insbesondere umfassend D4
und/oder $D_5$ und / oder DT-Zyklen,

mit Essigsäureanhydrid, Brönstedtsäure sowie Essigsäure umgesetzt werden,
wobei Brönstedtsäuren mit einem pKa-Wert $\leq$ 1,30, bevorzugt mit einem pKa-Wert $\leq$ 2,90, besonders bevorzugt mit einem pKa-Wert $\leq$ -4,90 eingesetzt werden und und wobei
die Essigsäure in Mengen von 0,4 bis 15,0 Gewichtsprozent, vorzugsweise 0,5 bis 10,0 Gewichtsprozent, bevorzugt 0,8 bis 6,5 Gewichtsprozent, besonders bevorzugt in Mengen von 1,0 bis 6,0 Gewichtsprozent, bezogen auf die Reaktionsmatrix, enthalten ist,

wobei das molare Mengenverhältnis von eingesetzter Brönstedtsäure zu Essigsäure

bei Brönstedtsäuren der Kategorie A), welche einen pKa-Wert ≤ -4,90 aufweisen, im Bereich von ≥ 1/30 und ≤ 1/3 liegt und
bei Brönstedtsäuren der Kategorie B), welche einen pKa-Wert von ≤ - 1,30 bis ≥ - 4,80 aufweisen, im Bereich von ≥ 1/10 und ≤ 1 liegt und
bei Mischungen von Brönstedtsäuren der Kategorie A) und Kategorie B) im Bereich von ≥ 1/30 und ≤ 1 liegt,

mit der Maßgabe, dass (i) entweder der alleinige Einsatz von Trifluormethansulfonsäure und Essigsäure ausgenommen ist, und/oder dass (ii) die eingesetzte Brönstedtsäure zumindest anteilsweise einen pKa-Wert zwischen -1,3 und > -13,5 aufweist,
wobei die Brönstedtsäure optional zumindest anteilsweise in situ bereitgestellt wird, vorzugsweise durch Einsatz einer Brönstedtsäuresalz-Brönstedtsäure-Kombination, wie vorzugsweise Aluminiumtriflat/ Methansulfonsäure, Bismutttriflat/ Methansulfonsäure und/oder Natriumtriflat/ Methansulfonsäure.

Eine bevorzugte Ausführungsform dieses Verfahrens zur Herstellung verzweigter terminale Acetoxyfunktionen tragender Siloxane sieht vor, dass als Komponente a) ein terminale Alkoxygruppen tragendes, verzweigtes Silikonäquilibrat zum Einsatz kommt.

Eine bevorzugte Ausführungsform dieses Verfahrens zur Herstellung verzweigter terminale Acetoxyfunktionen tragender Siloxane sieht vor, dass alle Komponenten a) und/oder b) sowie optional c) und gegebenenfalls d) zusammen mit Essigsäureanhydrid, Brönstedtsäure sowie Essigsäure vorgelegt und umgesetzt werden.

Eine bevorzugte Ausführungsform dieses Verfahrens zur Herstellung von $\alpha,\omega$-Diacetoxypolydimethylsiloxanen sieht vor, dass Komponente c) alleine und/ oder gegebenenfalls zusammen mit einfachen Siloxanzyklen mit Essigsäureanhydrid, Brönstedtsäure sowie Essigsäure umgesetzt wird.

Eine bevorzugte Ausführungsform dieses Verfahrens sieht vor, dass es unter Einsatz eines Reaktionssystems, wie zuvor ausführlich beschrieben, durchgeführt wird.

Bei den SiOC-basierten Polyethersiloxanen gibt es speziell und das insbesondere mit der Ausrichtung auf sehr einfach strukturierte Entschäumer gerichtet auch solche Wirktenside, bei denen das sehr anspruchsvolle Ziel des Erreichens des endäquilibrierten Zustands auf der Verarbeitungsstufe des Acetoxygruppen-tragenden Siloxans nicht zwingend erforderlich ist. Für derartige, eher minder anspruchsvolle Erfordernisse genügt es erfindungsgemäß Acetoxygruppen-tragende Siloxane, welche Gesamtcyclengehalte, definiert als Summe der Gehaltsanteile der zyklischen Siloxane umfassend $D_4$, $D_5$ und $D_6$ bezogen auf die Siloxanmatrix und gaschromatographisch ermittelt nach deren Derivatisierung zu den entsprechenden Isopropoxysiloxanen von kleiner 20 Gewichtsprozent aufweisen, nach einem Verfahren wie zuvor beschrieben herzustellen. Diese entspricht einer bevorzugten Ausführungsform der Erfindung. Für den Fachmann einsichtig, werden bei diesen produktionstechnischen Sonderfällen erzielbare Raum-Zeit-Ausbeuten gegengerechnet mit dem betrieblichen Aufwand, den man gewärtigt, um die erhöhte Siloxanzyklenfracht im weiteren Verarbeitungsgang z.B. destillativ zu entfernen.

Ein weiterer Gegenstand der Erfindung sind vor diesem Hintergrund brönstedtsaure, endäquilibrierte lineare $\alpha,\omega$-Acetoxygruppen-tragende Siloxane mit Kettenlängen größer 3 Siliziumatomen, welche Gesamtcyclengehalte, definiert als Summe der Gehaltsanteile der zyklischen Siloxane umfassend $D_4$, $D_5$ und $D_6$ bezogen auf die Siloxanmatrix und gaschromatographisch ermittelt nach deren Derivatisierung zu den entsprechenden linearen $\alpha,\omega$-Isopropoxysiloxanen von kleiner 20, vorzugsweise kleiner 13, besonders bevorzugt kleiner 12 Gewichtsprozent aufweisen, vorzugsweise hergestellt nach einem Verfahren wie zuvor beschrieben.

Ein weiterer Gegenstand der Erfindung sind vor diesem Hintergrund brönstedtsaure, endäquilibrierte verzweigte Acetoxygruppen-tragende Siloxane mit Kettenlängen größer 3 Siliziumatomen, vorzugsweise hergestellt nach einem Verfahren wie zuvor beschrieben, woebi sie Gesamtcyclengehalte, definiert als Summe der Gehaltsanteile der zyklischen Siloxane umfassend $D_4$, $D_5$ und $D_6$ bezogen auf die Siloxanmatrix und gaschromatographisch ermittelt nach deren Derivatisierung zu den entsprechenden verzweigten Isopropoxysiloxanen von kleiner 20, vorzugsweise kleiner 8, besonders bevorzugt kleiner 7 Gewichtsprozent aufweisen.

Ein weiterer Gegenstand der Erfindung ist die Verwendung von Acetoxygruppen tragenden Siloxanen, hergestellt unter Einsatz eines Reaktionssystems, wie zuvor beschrieben, zur Herstellung von Polyethersiloxanen, insbsondere für die Herstellung von Polyurethanschaumstabilisatoren, Entschäumern, Lack-, Verlaufs- und Dispergieradditiven und/oder Dismulgatoren.

**Beispiele:**

Die folgenden Beispiele dienen dem Fachmann allein zur Erläuterung dieser Erfindung und stellen keinerlei Beschränkung des beanspruchten Gegenstandes dar. Die Bestimmung der Wassergehalte erfolgt grundsätzlich mit der

Karl-Fischer-Methode in Anlehnung an DIN 51777, DGF E-III 10 und DGF C-III 13a. Die $^{29}$Si-NMR-Spektroskopie diente in allen Beispielen der Reaktionsverfolgung.

Die $^{29}$Si-NMR-Proben werden im Rahmen dieser Erfindung bei einer Messfrequenz von 79,49 MHz in einem Bruker Avance III Spektrometer, das mit einem Probenkopf 287430 mit 10 mm Spaltbreite ausgestattet ist, bei 22°C gelöst in CDCl3 und gegen Tetramethylsilan (TMS) als externem Standard[$\delta$($^{29}$Si) = 0,0 ppm] gemessen.

Die GPC's (Gel-Permeations-Chromatographie) werden unter Verwendung von THF als mobiler Phase an einer Säulenkombination SDV 1000/10000A, Länge 65 cm, ID 0,80 bei einer Temperatur von 30°C an einem SECcurity$^2$ GPC System 1260 (PSS Polymer Standards Service GmbH) aufgenommen.

Die Gaschromatogramme werden an einem GC-Gerät des Typs GC 7890B der Fa. AgilentTechnologies ausgestattet mit einer Säule vom Typ HP-1; 30m x 0,32mm ID x 0,25$\mu$m dF (Agilent Technologies Nr. 19091Z-413E) und Wasserstoff als Trägergas mit folgenden Parametern aufgenommen:

Detektor: FID; 310°C
Injektor: Split; 290°C
Mode: constant flow 2 mL/min
Temperaturprogramm: 60°C mit 8°C/min -150°C mit 40°C/min - 300°C 10 min.

Als Indikator für das Erreichen des Äquilibriergleichgewichtes wird der gaschromatographisch bestimmte Gesamtcylengehalt definiert als die Summe der $D_4$-, $D_5$-, $D_6$-Gehalte bezogen auf die Siloxanmatrix und festgestellt nach der Derivatisierung der verzweigten Acetoxygruppen tragenden Siloxane zu den entsprechenden verzweigten Isoproxygruppen tragenden Siloxanen beziehungsweise der $\alpha,\omega$-Diacetoxypolydimethylsiloxane zu den $\alpha,\omega$-Diisopropoxy-polydimethylsiloxanen herangezogen. Die Derivatisierung zu den verzweigten Isoproxygruppen tragenden Siloxanen beziehungsweise zu den $\alpha,\omega$-Diisopropoxy-polydimethylsiloxanen wird hierbei bewusst gewählt, um eine unter den Bedingungen der gaschromatographischen Analyse gegebenenfalls erfolgende, thermisch induzierte Rückspaltungsreaktion der verzweigten Acetoxygruppen tragenden Siloxane beziehungsweise der $\alpha,\omega$-Diacetoxy-polydimethylsiloxane zu verhindern (zur Rückspaltungsreaktion siehe u.a. J. Pola et al., Collect. Czech. Chem. Commun. 1974, 39(5), 1169-1176 und W. Simmler, Houben-Weyl, Methods of Organic Chemistry, Vol. VI/2, 4th Edition, O-Metal Derivates of Organic Hydroxy Compounds S. 162 ff)).

Soweit nicht anders gesagt, sind alle Angaben in Gewichtsprozent zu verstehen.

**Beispiel 1 (nicht erfindungsgemäß):**

Herstellung eines zyklisch-verzweigten Siloxans mit einem angestrebten D-/ T-Verhältnis von 6 : 1

In einem 10-I-Vierhalsrundkolben mit KPG-Rührerund aufgesetztem Rückflusskühlerwerden 783 g (4,39 mol) Methyltriethoxysilan zusammen mit 978,7 g (2,64 mol) Dekamethylcyclopentasiloxanunter Rühren auf 60°C erwärmt, mit 2,98 g Trifluormethansulfonsäure beaufschlagt und für 4 Stunden äquilibriert. Dann werden 237 g Wasser sowie 59,3 g Ethanol hinzugefügt und der Ansatz wird für weitere 2 Stunden auf Rückflusstemperatur erhitzt. Man fügt 159,0 g Wasser sowie 978,8 g (2,64 mol) Dekamethylcyclopentasiloxan ($D_5$) hinzu und tauscht den Rückflusskühler gegen eine Destillationsbrücke aus und destilliert innerhalb der folgenden Stunde die bis 90°C flüchtigen Bestandteile ab. Man fügt dann dem Reaktionsansatz 3000 ml Toluol hinzu und destilliert bis zu einer Sumpftemperatur von 100°C am Wasserabscheider das noch im Stoffsystem befindliche Wasser ab.

Man lässt den Reaktionsansatz auf etwa 60°C abkühlen, neutralisiert die Säure durch Zugabe von 60,0 g festen Natriumhydrogencarbonats und rührt dann zur vollständigen Neutralisation noch weitere 30 Minuten nach. Nach Abkühlen auf 25°C werden mit Hilfe eines Faltenfilters die Salze abgetrennt.

Bei 70°C und einem angelegten Hilfsvakuum von < 1mbar wird das als Lösungsmittel eingesetzte Toluol abdestilliert. Der Destillationssumpf ist eine farblose, leichtbewegliche Flüssigkeit deren $^{29}$Si-NMR-Spektrum ein D-/T-Verhältnis von 6,2 : 1 (angestrebt 6,0 : 1) zuweist. Bezogen auf die Summe der spektroskopisch erfassten Si-Einheiten kommt den D- und T-Einheiten, die Si-Alkoxy beziehungsweise SiOH-Gruppen tragen, ein Anteil von 0,52 Molprozent zu. Die gaschromatographische Analyse der Flüssigkeit weist außerdem einen Anteil von ca. 15 Gewichtsprozent an einfachen Siloxancyclen in Form von $D_4$, $D_5$ und $D_6$ nach. Das GPC weist eine breite Molmassenverteilung auf, gekennzeichnet durch Mw = 55258 g/ mol; Mn 1693 g/ mol und Mw/Mn = 32,63.

**Beispiel 2 (erfindungsgemäß):**

Herstellung eines Acetoxy-terminierten, verzweigten Siloxans mit 6,0 Massen-% Essigsäure-Zusatz und 1,0 Massen-% Schwefelsäurezusatz

In einem 1000-ml-Vierhalskolben mit KPG-Rührer, Innenthermometer und aufgesetztem Rückflusskühler werden 49,9 g (0,489 mol) Essigsäureanhydrid zusammen mit 268,1 g der in Beispiel 1 hergestellten DT-Zyklen (D/ T-Verhältnis nach $^{29}$Si-NMR-Spektrum = 6,18 : 1, M = 525,42 g/ mol und einem Anteil von SiOH/ SiOEt-Gruppierungen von 0,52 Mol-%) und 188,5 g Dekamethylcyclopentasiloxan ($D_5$) unter Rühren vorgelegt und mit 5,07 g Schwefelsäure (1,0 Massen-% bezogen auf den Gesamtansatz) und 30,4 g Essigsäure (6,0 Massen-% bezogen auf die Masse der Reaktanden) versetzt und zügig auf 150°C erhitzt. Die zu Beginn leicht trübe Reaktionsmischung wird unter weiterem Rühren für 6 Stunden bei dieser Temperatur belassen. Nach Erkalten des Ansatzes wird eine farblos-klare, leichtbewegliche Flüssigkeit isoliert, deren $^{29}$Si-NMR-Spektrum die Präsenz von Si-Acetoxygruppen in einer Ausbeute von ca. 88,2 % bezogen auf eingesetztes Essigsäureanhydrid sowie das vollständige Verschwinden spektroskopisch erfassbarer Anteile an Si-Alkoxy- und SiOH- Gruppen belegt.

<u>Überführung des verzweigten Acetoxysiloxans in das entsprechende verzweigte Isopropoxysiloxan zur analytischen Charakterisierung:</u>

Unmittelbar nach der Synthese werden 100,0 g dieses Brönstedtsauren, äquilibrierten verzweigten Acetoxysiloxans in einem 250-ml-Vierhalsrundkolben ausgerüstet mit mit KPG-Rührer, Innenthermometer und aufgesetztem Rückflusskühler zusammen mit 23,2 g eines über Molekularsieb getrockneten Isopropanols unter Rühren bei 22°C vermischt. Die Reaktionsmischung wird dann durch Einleiten gasförmigen Ammoniaks ($NH_3$) bis zur alkalischen Reaktion (feuchtes Universalindikatorpapier) beaufschlagt und dann noch 45 Minuten bei dieser Temperatur nachgerührt. Die ausgefallenen Salze werden mit Hilfe eines Faltenfilters abgetrennt. Isoliert wird eine farblos, klare Flüssigkeit deren begleitendes $^{29}$Si-NMR-Spektrum die quantitative Umwandlung des verzweigten Acetoxysiloxans in ein verzweigtes Isopropoxysiloxan belegt. Ein Aliquot dieses verzweigten Isopropoxysiloxans wird entnommen und gaschromatographisch analysiert. Das Gaschromatogramm weist folgende Gehalte (Angaben in Massenprozent) auf:

| $D_4$ | $D_5$ | $D_6$ | Summe ($D_4$ - $D_6$) | Isopropanolgehalt |
|---|---|---|---|---|
| 2,4 % | 1,3 % | 0,4 % | 4,1 % | 7,1 % |

Unter Berücksichtigung des Isopropanolüberschusses sind hierbei die Gehalte an Siloxancyclen ($D_4$, $D_5$ und $D_6$) allein bezogen auf den Siloxananteil berechnet.

**Beispiel 3 (erfindungsgemäß):**

Herstellung eines endäquilibrierten Acetoxy-terminierten, linearen Polydimethylsiloxans mit 6,0 Massen-% Essigsäure-Zusatz und mit 1,0 Massen-% Schwefelsäure-Zusatz:

In einem 1000-ml-Vierhalskolben mit KPG-Rührer, Innenthermometer und aufgesetztem Rückflusskühler werden 77,3 g (0,757 mol) Essigsäureanhydrid zusammen mit 732,8 g (1,98 mol) Dekamethylcyclopentasiloxan ($D_5$) und 48,6 g Essigsäure (6,0 Massen.-% bezogen auf die Gesamtmasse der Reaktanden) unter Rühren vorgelegt und mit 8,10 g Schwefelsäure (1,0 Massenprozent bezogen auf den Gesamtansatz) versetzt und zügig auf 150°C erhitzt. Die zu Beginn leicht trübe Reaktionsmischung wird unter weiterem Rühren für 6 Stunden bei dieser Temperatur belassen.
Nach Erkalten des Ansatzes wird eine farblos-klare, leichtbewegliche Flüssigkeit isoliert, deren $^{29}$Si-NMR-Spektrum die Präsenz von Si-Acetoxygruppen in einer Ausbeute von ca. 93% bezogen auf eingesetztes Essigsäureanhydrid belegt entsprechend einem $\alpha,\omega$-Diacetoxypolydimethylsiloxan mit einer mittleren Gesamtkettenlänge von ca. 14.

Überführung des $\alpha,\omega$-Diacetoxypolydimethylsiloxans in das entsprechende $\alpha,\omega$-Diisopropoxypolydimethylsiloxan:

Unmittelbar nach der Synthese werden 50,0 g dieses Brönstedtsauren, äquilibrierten $\alpha,\omega$-Diacetoxypolydimethylsiloxans in einem 250-ml-Vierhalsrundkolben ausgerüstet mit mit KPG-Rührer, Innenthermometer und aufgesetztem Rückflusskühler zusammen mit 11,3 g eines über Molekularsieb getrockneten Isopropanols unter Rühren bei 22°C vermischt. Die Reaktionsmischung wird dann durch Einleiten gasförmigen Ammoniaks (NH3) bis zur alkalischen Reaktion

(feuchtes Universalindikatorpapier) beaufschlagt und dann noch 45 Minuten bei dieser Temperatur nachgerührt. Die ausgefallenen Salze werden mit Hilfe eines Faltenfilters abgetrennt. Isoliert wird eine farblos, klare Flüssigkeit deren begleitendes $^{29}$Si-NMR-Spektrum die quantitative Umwandlung des α,ω-Diacetoxypolydimethylsiloxans in ein α,ω-Diisopropoxypolydimethylsiloxan belegt.

Ein Aliquot dieses α,ω-Diisopropoxypolydimethylsiloxans wird entnommen und gaschromatographisch analysiert. Das Gaschromatogramm weist folgende Gehalte (Angaben in Massenprozent) auf:

| $D_4$ | $D_5$ | $D_6$ | Summe ($D_4$ - $D_6$) | Isopropanolgehalt |
|---|---|---|---|---|
| 5,50 % | 3,70 % | 1,10 % | 10,30 % | 12,00 % |

Unter Berücksichtigung des Isopropanolüberschusses sind hierbei die Gehalte an Siloxancyclen ($D_4$, $D_5$ und $D_6$) allein bezogen auf den Siloxananteil berechnet.

**Beispiel 4 (nicht erfindungsgemäß):**

Herstellung eines endäquilibrierten Acetoxy-terminierten, linearen Polydimethylsiloxans mit 1,5 Massen-% Essigsäure-Zusatz und 0,2 Massen-% Trifluormethansulfonsäure-Zusatz:

In einem 1000-ml-Vierhalskolben mit KPG-Rührer, Innenthermometer und aufgesetztem Rückflusskühlerwerden 77,3 g (0,757 mol) Essigsäureanhydrid zusammen mit 732,8 g (1,98 mol) Dekamethylcyclopentasiloxan ($D_5$) und 12,2 g Essigsäure (1,5 Gew.-% bezogen auf die Gesamtmasse der Reaktanden) unter Rühren vorgelegt und mit 1,62 g (0,88 ml) Trifluormethansulfonsäure (0,2 Massenprozent bezogen auf den Gesamtansatz) versetzt und zügig auf 150°C erhitzt. Die zu Beginn leicht trübe Reaktionsmischung wird unter weiterem Rühren für 6 Stunden bei dieser Temperatur belassen.

Nach Erkalten des Ansatzes wird eine farblos-klare, leichtbewegliche Flüssigkeit isoliert, deren $^{29}$Si-NMR-Spektrum die Präsenz von Si-Acetoxygruppen in einer Ausbeute von ca. 93% bezogen auf eingesetztes Essigsäureanhydrid belegt entsprechend einem α,ω-Diacetoxypolydimethylsiloxan mit einer mittleren Gesamtkettenlänge von ca. 14.

Überführung des α,ω-Diacetoxypolydimethylsiloxans in das entsprechende α,ω-Diisopropoxypolydimethylsiloxan zur analytischen Charakterisierung:

Unmittelbar nach der Synthese werden 50,0 g dieses trifluormethansulfonsauren, äquilibrierten α,ω-Diacetoxypolydimethylsiloxans in einem 250-ml-Vierhalsrundkolben ausgerüstet mit mit KPG-Rührer, Innenthermometer und aufgesetztem Rückflusskühler zusammen mit 11,3 g eines über Molekularsieb getrockneten Isopropanols unter Rühren bei 22°C vermischt. Die Reaktionsmischung wird dann durch Einleiten gasförmigen Ammoniaks ($NH_3$) bis zur alkalischen Reaktion (feuchtes Universalindikatorpapier) beaufschlagt und dann noch 45 Minuten bei dieser Temperatur nachgerührt. Die ausgefallenen Salze werden mit Hilfe eines Faltenfilters abgetrennt. Isoliert wird eine farblos, klare Flüssigkeit deren begleitendes $^{29}$Si-NMR-Spektrum die quantitative Umwandlung des α,ω-Diacetoxypolydimethylsiloxans in ein α,ω-Diisopropoxypolydimethylsiloxan belegt.

Ein Aliquot dieses α,ω-Diisopropoxypolydimethylsiloxans wird entnommen und gaschromatographisch analysiert. Das Gaschromatogramm weist folgende Gehalte (Angaben in Massenprozent) auf:

| $D_4$ | $D_5$ | $D_6$ | Summe ($D_4$ - $D_6$) | Isopropanolgehalt |
|---|---|---|---|---|
| 4,94 % | 4,04 % | 1,07 % | 10,06 % | 11,00 % |

Unter Berücksichtigung des Isopropanolüberschusses sind hierbei die Gehalte an Siloxancyclen ($D_4$, $D_5$ und $D_6$) allein bezogen auf den Siloxananteil berechnet.

**Beispiel 5 (nicht erfindungsgemäß):**

Herstellung eines Acetoxy-terminierten, linearen Polydimethylsiloxans mit 1,5 Massen-% Essigsäure-Zusatz und mit 0,6 Massen-% Schwefelsäure-Zusatz:

In einem 1000-ml-Vierhalskolben mit KPG-Rührer, Innenthermometer und aufgesetztem Rückflusskühlerwerden 77,3 g (0,757 mol) Essigsäureanhydrid zusammen mit 732,8 g (1,98 mol) Dekamethylcyclopentasiloxan ($D_5$) und 12,2 g Essigsäure (1,5 Massen.-% bezogen auf die Gesamtmasse der Reaktanden) unter Rühren vorgelegt und mit 4,86 g Schwefelsäure (0,6 Massenprozent bezogen auf den Gesamtansatz) versetzt und zügig auf 150°C erhitzt. Die zu Beginn leicht trübe Reaktionsmischung wird unter weiterem Rühren für 6 Stunden bei dieser Temperatur belassen.

Nach Erkalten des Ansatzes wird eine farblos-klare, leichtbewegliche Flüssigkeit isoliert, deren $^{29}$Si-NMR-Spektrum die Präsenz von Si-Acetoxygruppen in einer Ausbeute von ca. 90% bezogen auf eingesetztes Essigsäureanhydrid belegt entsprechend einem $\alpha,\omega$-Diacetoxypolydimethylsiloxan mit 15 einer mittleren Gesamtkettenlänge von ca. 14.

Überführung des $\alpha,\omega$-Diacetoxypolydimethylsiloxans in das entsprechende $\alpha,\omega$-Diisopropoxypolydimethylsiloxan

Unmittelbar nach der Synthese werden 50,0 g dieses Brönstedtsauren $\alpha,\omega$-Diacetoxypolydimethylsiloxans in einem 250-ml-Vierhalsrundkolben ausgerüstet mit mit KPG-Rührer, Innenthermometer und aufgesetztem Rückflusskühler zusammen mit 11,3 g eines über Molekularsieb getrockneten Isopropanols unter Rühren bei 22°C vermischt. Die Reaktionsmischung wird dann durch Einleiten gasförmigen Ammoniaks ($NH_3$) bis zur alkalischen Reaktion (feuchtes Universalindikatorpapier) beaufschlagt und dann noch 45 Minuten bei dieser Temperatur nachgerührt. Die ausgefallenen Salze werden mit Hilfe eines Faltenfilters abgetrennt. Isoliert wird eine farblos, klare Flüssigkeit deren begleitendes $^{29}$Si-NMR-Spektrum die quantitative Umwandlung des $\alpha,\omega$-Diacetoxypolydimethylsiloxans in ein $\alpha,\omega$-Diisopropoxypolydimethylsiloxan belegt.

Ein Aliquot dieses $\alpha,\omega$-Diisopropoxypolydimethylsiloxans wird entnommen und gaschromatographisch analysiert. Das Gaschromatogramm weist folgende Gehalte (Angaben in Massenprozent) auf:

| $D_4$ | $D_5$ | $D_6$ | Summe ($D_4$ - $D_6$) | Isopropanolgehalt |
|---|---|---|---|---|
| 1,80 % | 56,6 % | 1,20 % | 59,60 % | 13,00 % |

Unter Berücksichtigung des Isopropanolüberschusses sind hierbei die Gehalte an Siloxancyclen ($D_4$, $D_5$ und $D_6$) allein bezogen auf den Siloxananteil berechnet.

**Beispiel 6 (erfindungsgemäß):**

Herstellung eines endäquilibrierten Acetoxy-terminierten, linearen Polydimethylsiloxans mit 1,5 Massen-% Essigsäure-Zusatz und mit 0,5 Massen-% Natriumtriflat-Zusatz sowie 0,5% Methansulfonsäure-Zusatz:

In einem 500-ml-Vierhalskolben mit KPG-Rührer, Innenthermometer und aufgesetztem Rückflusskühlerwerden 30,8 g (0,302 mol) Essigsäureanhydrid zusammen mit269,1 g (0,73 mol) Dekamethylcyclopentasiloxan ($D_5$) und 4,5 g Essigsäure (1,5 Massen.-% bezogen auf die Gesamtmasse der Reaktanden) unter Rühren vorgelegt und mit 1,5 g Natriumtriflat (0,009 mol) und 1,5 g Methansulfonsäure (0,016 mol) versetzt und zügig auf 150°C erhitzt. Die zu Beginn leicht trübe Reaktionsmischung wird unter weiterem Rühren für 6 Stunden bei dieser Temperatur belassen.

Nach Erkalten des Ansatzes wird eine farblos-klare, leichtbewegliche Flüssigkeit isoliert, deren $^{29}$Si-NMR-Spektrum die Präsenz von Si-Acetoxygruppen in einer Ausbeute von ca. 91% bezogen auf eingesetztes Essigsäureanhydrid belegt entsprechend einem $\alpha,\omega$-Diacetoxypolydimethylsiloxan mit einer mittleren Gesamtkettenlänge von ca. 12.

Überführung des $\alpha,\omega$-Diacetoxypolydimethylsiloxans in das entsprechende $\alpha,\omega$-Diisopropoxypolydimethylsiloxan.

Unmittelbar nach der Synthese werden 50,0 g dieses Brönstedtsauren, äquilibrierten $\alpha,\omega$-Diacetoxypolydimethylsiloxans in einem 250-ml-Vierhalsrundkolben ausgerüstet mit mit KPG-Rührer, Innenthermometer und aufgesetztem Rückflusskühler zusammen mit 11,3 g eines über Molekularsieb getrockneten Isopropanols unter Rühren bei 22°C vermischt. Die Reaktionsmischung wird dann durch Einleiten gasförmigen Ammoniaks ($NH_3$) bis zur alkalischen Reaktion (feuchtes Universalindikatorpapier) beaufschlagt und dann noch 45 Minuten bei dieser Temperatur nachgerührt. Die ausgefallenen Salze werden mit Hilfe eines Faltenfilters abgetrennt. Isoliert wird eine farblos, klare Flüssigkeit deren begleitendes $^{29}$Si-NMR-Spektrum die quantitative Umwandlung des $\alpha,\omega$-Diacetoxypolydimethylsiloxans in ein $\alpha,\omega$-Diisopropoxypolydimethylsiloxan belegt.

Ein Aliquot dieses $\alpha,\omega$-Diisopropoxypolydimethylsiloxans wird entnommen und gaschromatographisch analysiert. Das Gaschromatogramm weist folgende Gehalte (Angaben in Massenprozent) auf:

| $D_4$ | $D_5$ | $D_6$ | Summe ($D_4$ - $D_6$) | Isopropanolgehalt |
|---|---|---|---|---|
| 5,30 % | 3,40 % | 1,20 % | 9,90 % | 11,00 % |

Unter Berücksichtigung des Isopropanolüberschusses sind hierbei die Gehalte an Siloxancyclen ($D_4$, $D_5$ und $D_6$) allein bezogen auf den Siloxananteil berechnet.

**Beispiel 7 (erfindungsgemäß):**

Herstellung eines endäquilibrierten Acetoxy-terminierten, linearen Polydimethylsiloxans mit 10 Massen-% Essigsäure-Zusatz und mit 5,0 Massen-% Methansulfonsäure-Zusatz:

In einem 500-ml-Vierhalskolben mit KPG-Rührer, Innenthermometer und aufgesetztem Rückflusskühlerwerden 22,7 g (0,222 mol) Essigsäureanhydrid zusammen mit 230,2 g (0,62 mol) Dekamethylcyclopentasiloxan ($D_5$) und 25,3 g Essigsäure (0,42 mol, 10,0 Massen.-% bezogen auf die Gesamtmasse der Reaktanden) unter Rühren vorgelegt und mit 12,6 g Methansulfonsäure (0,13 mol, 5,0 Massen.-% bezogen auf die Gesamtmasse der Reaktanden) versetzt und zügig auf 140°C erhitzt, wobei sich Rückflussbedingungen einstellten. Die zu Beginn leicht trübe Reaktionsmischung wird unter weiterem Rühren für 6 Stunden bei dieser Temperatur belassen.

Nach Erkalten des Ansatzes wird eine farblos-klare, leichtbewegliche Flüssigkeit isoliert, deren $^{29}$Si-NMR-Spektrum die Präsenz von Si-Acetoxygruppen in einer Ausbeute von ca. 93% bezogen auf eingesetztes Essigsäureanhydrid belegt entsprechend einem $\alpha,\omega$-Diacetoxypolydimethylsiloxan mit einer mittleren Gesamtkettenlänge von ca. 16.

Überführung des $\alpha,\omega$-Diacetoxypolydimethylsiloxans in das entsprechende $\alpha,\omega$-Diisopropoxypolydimethylsiloxan:

Unmittelbar nach der Synthese werden 50,0 g dieses Brönstedtsauren, äquilibrierten $\alpha,\omega$-Diacetoxypolydimethylsiloxans in einem 250-ml-Vierhalsrundkolben ausgerüstet mit mit KPG-Rührer, Innenthermometer und aufgesetztem Rückflusskühler zusammen mit 11,3 g eines über Molekularsieb getrockneten Isopropanols unter Rühren bei 22°C vermischt. Die Reaktionsmischung wird dann durch Einleiten gasförmigen Ammoniaks ($NH_3$) bis zur alkalischen Reaktion (feuchtes Universalindikatorpapier) beaufschlagt und dann noch 45 Minuten bei dieser Temperatur nachgerührt. Die ausgefallenen Salze werden mit Hilfe eines Faltenfilters abgetrennt. Isoliert wird eine farblos, klare Flüssigkeit deren begleitendes $^{29}$Si-NMR-Spektrum die quantitative Umwandlung des $\alpha,\omega$-Diacetoxypolydimethylsiloxans in ein $\alpha,\omega$-Diisopropoxypolydimethylsiloxan belegt.

Ein Aliquot dieses $\alpha,\omega$-Diisopropoxypolydimethylsiloxans wird entnommen und gaschromatographisch analysiert. Das Gaschromatogramm weist folgende Gehalte (Angaben in Massenprozent) auf:

| $D_4$ | $D_5$ | $D_6$ | Summe ($D_4$ - $D_6$) | Isopropanolgehalt |
|---|---|---|---|---|
| 5,05 % | 3,98 % | 1,10 % | 10,13 % | 12,00 % |

Unter Berücksichtigung des Isopropanolüberschusses sind hierbei die Gehalte an Siloxancyclen ($D_4$, $D_5$ und $D_6$) allein bezogen auf den Siloxananteil berechnet.

**Patentansprüche**

**1.** Reaktionssystem zur Herstellung endäquilibrierter Acetoxyfunktionen tragender Siloxane mit Kettenlängen größer 3 Siliziumatomen, umfassend

a) Alkoxygruppen tragende Silane und/oder Siloxane und/oder
b) Acetoxygruppen tragende Silane und/oder Siloxane, und/oder
c) Hydroxygruppen tragende Silane und/oder Siloxane und/ oder
d) einfache Siloxanzyklen und/ oder DT-Zyklen,
sowie
e) ein Reaktionsmedium, umfassend Essigsäureanhydrid, Brönstedtsäure sowie
Essigsäure,
wobei Brönstedtsäuren mit einem pKa-Wert ≤ -1,30, bevorzugt mit einem pKa-Wert ≤ - 2,90, besonders bevorzugt

mit einem pKa-Wert ≤ -4,90 eingesetzt werden,
und wobei
die Essigsäure im Reaktionssystem in Mengen von 0,4 bis 15,0 Gewichtsprozent, vorzugsweise 0,5 bis 10,0 Gewichtsprozent, bevorzugt 0,8 bis 6,5 Gewichtsprozent, besonders bevorzugt in Mengen von 1,0 bis 6,0 Gewichtsprozent, bezogen auf das Reaktionssystem, enthalten ist,
wobei das molare Mengenverhältnis von eingesetzter Brönstedtsäure zu Essigsäure bei Brönstedtsäuren der Kategorie A), welche einen pKa-Wert ≤ -4,90 aufweisen, im Bereich von ≥ 1/30 und ≤ 1/3 liegt und
bei Brönstedtsäuren der Kategorie B), welche einen pKa-Wert von ≤ - 1,30 bis ≥ - 4,80 aufweisen, im Bereich von ≥ 1/10 und ≤ 1 liegt und
bei Mischungen von Brönstedtsäuren der Kategorie A) und Kategorie B) im Bereich von ≥ 1/30 und ≤ 1 liegt,
mit der Maßgabe, dass (i) entweder der alleinige Einsatz von Trifluormethansulfonsäure sowie von Trifluormethansulfonsäure und Essigsäure ausgenommen ist, und/oder dass (ii) die eingesetzte Brönstedtsäure zumindest anteilsweise einen pKa-Wert zwischen - 1,3 und > -13,5 aufweist.

**2.** Reaktionssystem gemäß Anspruch 1 zur Herstellung verzweigter terminale Acetoxyfunktionen tragender Siloxane, **dadurch gekennzeichnet, dass** ein Alkoxygruppen tragendes, mindestens eine T- und/ oder Q-Gruppe enthaltendes Silan und/oder Siloxan und/oder ein Acetoxygruppen tragendes, mindestens eine T- und/ oder Q-Gruppe enthaltendes Silan/Siloxan, und/oder, DT-Zyklen eingesetzt werden.

**3.** Reaktionssystem gemäß einem der Ansprüche 1 oder 2, **dadurch gekennzeichnet, dass** Alkoxysilane eingesetzt werden, vorzugsweise Dimethyldialkoxysilane, Methyltrialkoxysilane und/oder ortho-Alkylkieselsäureester $Si(OR)_4$, mit R = Alkylrest, verzweigter Alkylrest oder Cycloalkylrest, mit 1 bis 10 Kohlenstoffatomen, vorzugsweise mit 1 bis 4, besonders bevorzugt R = Ethyl-,

**4.** Reaktionssystem gemäß einem der Ansprüche 1 bis 3, **dadurch gekennzeichnet, dass** lineare und/oder verzweigte Alkoxysiloxane eingesetzt werden, vorzugsweise solche der Formel:

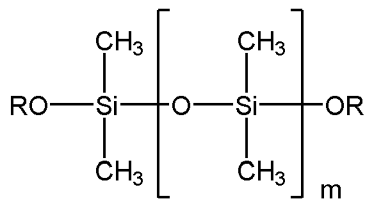

mit m = 1 bis 300, vorzugsweise 12 bis 150, besonders bevorzugt m = 20 bis 80, oder

$CH_3SiD_aD_bD_c(OR)_3$

oder

$SiD_aD_bD_cD_d(OR)_4$

mit a, b, c und d jeweils unbhängig voneinander 1 bis 100, vorzugsweise 2 bis 50, besonders bevorzugt 10 bis 30 und
R = Alkylrest, verzweigter Alkylrest, Cycloalkylrest mit 1 bis 10 Kohlenstoffatomen, vorzugsweise mit 1 bis 4, besonders bevorzugt R = Ethyl-,

**5.** Reaktionssystem gemäß Anspruch 4, wobei die eingesetzten Alkoxysiloxane aus saurer Äquilibrierung von Dimethyldialkoxysilanen oder Methyltrialkoxysilanen mit einfachen Siloxanzyklen (insbesondere umfassend $D_4$ und/oder $D_5$) resultieren.

**6.** Reaktionssystem gemäß einem der Ansprüche 1 bis 5, **dadurch gekennzeichnet, dass** einfache Siloxanzyklen eingesetzt werden, insbesondere umfassend $D_3$ (Hexamethylcyclotrisiloxan), $D_4$ (Octamethylcyclotetrasiloxan), $D_5$ (Dekamethylcyclopentasiloxan) und/oder $D_6$ (Dodekamethylcyclohexasiloxan), wobei $D_4$ und/oder $D_5$ besonders bevorzugt sind, und $D_5$ am meisten bevorzugt ist.

**7.** Reaktionssystem gemäß einem der Ansprüche 1 bis 6, **dadurch gekennzeichnet, dass** hydroxyfunktionelle Silane

und/ oder hydroxyfunktionelle Siloxane eingesetzt werden, vorzugsweise Dimethylsilanol $(CH_3)_2Si(OH)_2$, Methylsilanol $(CH_3Si(OH)_3)$ und/oder ortho-Kieselsäure $Si(OH)_4$ und/ oder als hydroxyfunktionelle Siloxane vorzugsweise $\alpha,\omega$-Polydimethylsiloxandiole der folgenden Formel:

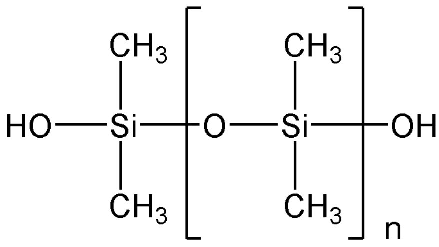

mit n = 1 bis 300, vorzugsweise n = 12 bis 150, besonders bevorzugt n = 20 bis 80, eingesetzt werden.

**8.** Reaktionssystem gemäß einem der Ansprüche 1 bis 7, **dadurch gekennzeichnet, dass** zyklisch-verzweigte Siloxane vom DT-Typ eingesetzt werden, vorzugsweise

j) Mischungen zyklischer-verzweigter Siloxane vom D/T-Typ, die aus D- und T-Einheiten aufweisenden Siloxanen bestehen und deren mit $^{29}$Si-NMR-Spektroskopie bestimmbarer summarischer Anteil der in der Siloxanmatrix vorhandenen D- und T-Einheiten, die Si-Alkoxy- und/oder SiOH-Gruppen aufweisen, ≤ 2 Molprozent, bevorzugt kleiner 1 Molprozent ist, und die bevorzugt zumindest 5 Gewichtsprozent Siloxancyclen, wie vorzugsweise Oktamethylcyclotetrasiloxan $(D_4)$, Dekamethylcyclopentasiloxan $(D_5)$ und/oder deren Mischungen enthalten oder aber
jj) Mischungen zyklischer-verzweigter, D- und T-Einheiten aufweisender Siloxane deren mit $^{29}$Si-NMR-Spektroskopie bestimmbarer summarischer Anteil der in der Siloxanmatrix vorhandenen D- und T-Einheiten, die Si-Alkoxy- und/oder SiOH-Gruppen aufweisen, größer 2 und kleiner 10 Molprozent sind.

**9.** Reaktionssystem gemäß einem der Ansprüche 1 bis 8, **dadurch gekennzeichnet, dass** die für das Reaktionssystem benötigte Brönstedtsäure zumindest anteilsweise in situ bereitgestellt wird, vorzugsweise durch Einsatz einer Brönstedtsäuresalz-Brönstedtsäure-Kombination im Reaktionssystem, wie vorzugsweise Aluminiumtriflat/Methansulfonsäure, Bismutttriflat/Methansulfonsäure und/oder Natriumtriflat/ Methansulfonsäure und/ oder Natriumtriflat/ Schwefelsäure.

**10.** Verfahren zur Herstellung Brönstedtsaurer, linearer oder verzweigter, endäquilibrierter Acetoxyfunktionen tragender Siloxane mit Kettenlängen größer 3 Siliziumatomen, **dadurch gekennzeichnet, dass**

a) Alkoxygruppen tragende Silane und/oder Siloxane, und/oder
b) Acetoxygruppen tragende Silane und/oder Siloxane, und/oder
c) Hydroxygruppen tragende Silane und/oder Siloxane und/ oder
d) einfache Siloxanzyklen, insbesondere umfassend $D_4$ und/oder $D_5$ und / oder DT-Zyklen, mit Essigsäureanhydrid, Brönstedtsäure sowie Essigsäure umgesetzt werden,

wobei

Brönstedtsäuren mit einem pKa-Wert ≤ 1,30, bevorzugt mit einem pKa-Wert ≤ 2,90, besonders bevorzugt mit einem pKa-Wert ≤ -4,90 eingesetzt werden und
wobei
die Essigsäure in Mengen von 0,4 bis 15,0 Gewichtsprozent, vorzugsweise 0,5 bis 10,0 Gewichtsprozent, bevorzugt 0,8 bis 6,5 Gewichtsprozent, besonders bevorzugt in Mengen von 1,0 bis 6,0 Gewichtsprozent, bezogen auf die Reaktionsmatrix, enthalten ist,
wobei
das molare Mengenverhältnis von eingesetzter Brönstedtsäure zu Essigsäure bei Brönstedtsäuren der Kategorie A), welche einen pKa-Wert ≤ -4,90 aufweisen, im Bereich von ≥ 1/30 und ≤ 1/3 liegt und
bei Brönstedtsäuren der Kategorie B), welche einen pKa-Wert von ≤ - 1,30 bis ≥ - 4,80 aufweisen, im Bereich von ≥ 1/10 und ≤ 1 liegt und
bei Mischungen von Brönstedtsäuren der Kategorie A) und Kategorie B) im Bereich von ≥ 1/30 und ≤ 1 liegt,

mit der Maßgabe, dass (i) entweder der alleinige Einsatz
von Trifluormethansulfonsäure und Essigsäure ausgenommen ist, und/oder dass (ii) die eingesetzte Brönstedtsäure zumindest anteilsweise einen pKa-Wert zwischen - 1,3 und > -13,5 aufweist,
wobei
die Brönstedtsäure optional zumindest anteilsweise in situ bereitgestellt wird, vorzugsweise durch Einsatz einer Brönstedtsäuresalz-Brönstedtsäure-Kombination, wie vorzugsweise Aluminiumtriflat/Methansulfonsäure, Bismutttriflat/Methansulfonsäure und/oder Natriumtriflat/ Methansulfonsäure und/ oder Natriumtriflat/ Schwefelsäure.

**11.** Verfahren nach Anspruch 10 zur Herstellung verzweigter terminale Acetoxyfunktionen tragender Siloxane, **dadurch gekennzeichnet, dass** als Komponente a) ein terminale Alkoxygruppen tragendes, verzweigtes Silikonäquilibrat zum Einsatz kommt.

**12.** Verfahren nach Anspruch 10 oder 11 zur Herstellung verzweigter terminale Acetoxyfunktionen tragender Siloxane, **dadurch gekennzeichnet, dass** alle Komponenten a) und/oder b) sowie optional c) und gegebenenfalls d) zusammen mit Essigsäureanhydrid, Brönstedtsäure sowie Essigsäure vorgelegt und umgesetzt werden.

**13.** Verfahren nach Anspruch 10 zur Herstellung von $\alpha,\omega$-Diacetoxypolydimethylsiloxanen, **dadurch gekennzeichnet, dass** Komponente c) alleine und/ oder gegebenenfalls zusammen mit einfachen Siloxanzyklen mit Essigsäureanhydrid, Brönstedtsäure sowie Essigsäure umgesetzt wird.

**14.** Verfahren nach einem der Ansprüche 10 bis 13, **dadurch gekennzeichnet, dass** es unter Einsatz eines Reaktionssystems, wie in einem der Ansprüche 1 bis 9 definiert, durchgeführt wird.

**15.** Brönstedtsäure, endäquilibrierte lineare $\alpha,\omega$-Acetoxygruppen-tragende Siloxane mit Kettenlängen größer 3 Siliziumatomen, welche Gesamtcyclengehalte, definiert als Summe der Gehaltsanteile der zyklischen Siloxane umfassend $D_4$, $D_5$ und $D_6$ bezogen auf die Siloxanmatrix und gaschromatographisch ermittelt nach deren Derivatisierung zu den entsprechenden linearen $\alpha,\omega$-Isopropoxysiloxanen von kleiner 20, vorzugsweise kleiner 13, besonders bevorzugt kleiner 12 Gewichtsprozent aufweisen, vorzugsweise hergestellt nach einem Verfahren gemäß Anspruch 10 oder 13-14.

**16.** Brönstedtsäure, endäquilibrierte verzweigte Acetoxygruppen-tragende Siloxane mit Kettenlängen größer 3 Siliziumatomen, vorzugsweise hergestellt nach einem Verfahren nach Anspruch 10 bis 12 oder 14, **dadurch gekennzeichnet, dass** sie Gesamtcyclengehalte, definiert als Summe der Gehaltsanteile der zyklischen Siloxane umfassend $D_4$, $D_5$ und $D_6$ bezogen auf die Siloxanmatrix und gaschromatographisch ermittelt nach deren Derivatisierung zu den entsprechenden verzweigten Isopropoxysiloxanen von kleiner 20, vorzugsweise kleiner 8, besonders bevorzugt kleiner 7 Gewichtsprozent aufweisen.

**17.** Verwendung von endäquilibrierten Acetoxygruppen tragenden Siloxanen, hergestellt unter Einsatz eines Reaktionssystems, wie in einem der Ansprüche 1 bis 9 definiert, insbesondere nach Maßgabe von zumindest einem der Ansprüche 10 bis 14, zur Herstellung von Polyethersiloxanen, insbsondere für die Herstellung von Polyurethanschaumstabilisatoren, Entschäumern, Lack-, Verlaufs- und Dispergieradditiven und/oder Dismulgatoren.

## Claims

**1.** Reaction system for preparing <u>end-equilibrated</u> acetoxy function-bearing siloxanes having chain lengths of more than 3 silicon atoms, comprising

a) silanes and/or siloxanes bearing alkoxy groups and/or
b) silanes and/or siloxanes bearing acetoxy groups, and/or
c) silanes and/or siloxanes bearing hydroxy groups, and/or
d) simple siloxane cycles and/or DT cycles,
and
e) a reaction medium comprising acetic anhydride, Bronsted acid and acetic acid,
wherein Bronsted acids having a pKa ≤ -1.30, preferably having a pKa ≤ -2.90, particularly preferably having a pKa ≤ -4.90 are used,
and wherein

the acetic acid is present in the reaction system in amounts of 0.4 to 15.0 per cent by weight, with preference 0.5 to 10.0 per cent by weight, preferably 0.8 to 6.5 per cent by weight, particularly preferably in amounts of 1.0 to 6.0 per cent by weight, based on the reaction system, wherein the molar ratio of Bronsted acid used to acetic acid in the case of Bronsted acids of category A), which have a pKa ≤ -4.90, is in the range from ≥ 1/30 and ≤ 1/3 and in the case of Bronsted acids of category B), which have a pKa of ≤ -1.30 to ≥ -4.80, is in the range from ≥ 1/10 and ≤ 1 and

in the case of mixtures of Bronsted acids of category A) and category B) is in the range from ≥ 1/30 and ≤ 1, with the proviso that (i) either the sole use of trifluoromethanesulfonic acid and also of trifluoromethanesulfonic acid and acetic acid is excluded, and/or that (ii) the Bronsted acid used at least in part has a pKa between -1.3 and > -13.5.

**2.** Reaction system according to Claim 1 for preparing branched siloxanes bearing terminal acetoxy functions, **characterized in that** a silane and/or siloxane bearing alkoxy groups and containing at least one T and/or Q group, and/or a silane/siloxane bearing acetoxy groups and containing at least one T and/or Q group, and/or DT cycles, are used.

**3.** Reaction system according to either of Claims 1 and 2, **characterized in that** alkoxysilanes are used, preferably dimethyldialkoxysilanes, methyltrialkoxysilanes and/or alkyl orthosilicates $Si(OR)_4$, where R = alkyl radical, branched alkyl radical or cycloalkyl radical, having 1 to 10, preferably having 1 to 4, carbon atoms; particularly preferably R = ethyl-.

**4.** Reaction system according to any of Claims 1 to 3, **characterized in that** linear and/or branched alkoxysiloxanes are used, preferably those of the formula:

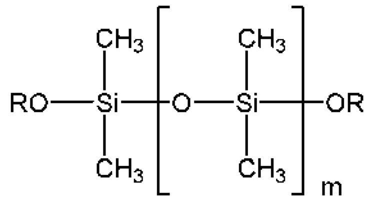

where m = 1 to 300, preferably 12 to 150, particularly preferably m = 20 to 80, or

$$CH_3SiD_aD_bD_c\ (OR)_3$$

or

$$SiD_aD_bD_cD_d\ (OR)_4$$

where a, b, c and d are each independently 1 to 100, preferably 2 to 50, particularly preferably 10 to 30 and R = alkyl radical, branched alkyl radical, cycloalkyl radical having 1 to 10, preferably having 1 to 4, carbon atoms; particularly preferably R = ethyl-.

**5.** Reaction system according to Claim 4, wherein the alkoxysiloxanes used result from acidic equilibration of dimethyldialkoxysilanes or methyltrialkoxysilanes with simple siloxane cycles (especially comprising $D_4$ and/or $D_5$).

**6.** Reaction system according to any of Claims 1 to 5, **characterized in that** simple siloxane cycles are used, especially comprising $D_3$ (hexamethylcyclotrisiloxane), $D_4$ (octamethylcyclotetrasiloxane), $D_5$ (decamethylcyclopentasiloxane) and/or $D_6$ (dodecamethylcyclohexasiloxane), where $D_4$ and/or $D_5$ are particularly preferred, and $D_5$ is most preferred.

**7.** Reaction system according to any of Claims 1 to 6, **characterized in that** hydroxy-functional silanes and/or hydroxy-functional siloxanes are used, preferably dimethylsilanol $(CH_3)_2Si(OH)_2$, methylsilanol ($CH_3Si(OH)_3$) and/or orthosilicic acid $Si(OH)_4$, and/or the hydroxy-functional siloxanes used are preferably $\alpha,\omega$-polydimethylsiloxanediols of the following formula:

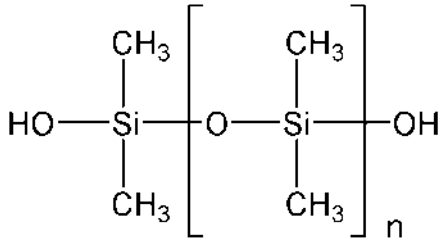

where n = 1 to 300, preferably n = 12 to 150, particularly preferably n = 20 to 80.

**8.** Reaction system according to any of Claims 1 to 7, **characterized in that** cyclic branched siloxanes of the DT type are used, preferably

j) mixtures of cyclic branched siloxanes of the D/T type which consist of siloxanes having D and T units and whose cumulative proportion of D and T units present in the siloxane matrix and having Si-alkoxy and/or SiOH groups, determinable by $^{29}$Si NMR spectroscopy, is ≤ 2 mole per cent, preferably less than 1 mole per cent, and which preferably contain at least 5 per cent by weight of siloxane cycles, such as preferably octamethylcyclotetrasiloxane ($D_4$), decamethylcyclopentasiloxane ($D_5$) and/or mixtures of these or else
jj) mixtures of cyclic branched siloxanes having D and T units whose cumulative proportion of D and T units present in the siloxane matrix and having Si-alkoxy and/or SiOH groups, determinable by $^{29}$Si NMR spectroscopy, is greater than 2 and less than 10 mole per cent.

**9.** Reaction system according to any of Claims 1 to 8, **characterized in that** the Bronsted acid required for the reaction system is at least partly provided in situ, preferably by use of a Bronsted acid salt-Brønsted acid combination in the reaction system, such as preferably aluminium triflate/methanesulfonic acid, bismuth triflate/methanesulfonic acid and/or sodium triflate/methanesulfonic acid and/or sodium triflate/sulfuric acid.

**10.** Process for preparing Brønsted-acidic, linear or branched, end-equilibrated acetoxy function-bearing siloxanes having chain lengths of more than 3 silicon atoms, **characterized in that**

a) silanes and/or siloxanes bearing alkoxy groups, and/or
b) silanes and/or siloxanes bearing acetoxy groups, and/or
c) silanes and/or siloxanes bearing hydroxy groups, and/or
d) simple siloxane cycles, especially comprising $D_4$ and/or $D_5$ and/or DT cycles, are reacted with acetic anhydride, Bronsted acid and acetic acid,

wherein

Bronsted acids having a pKa ≤ 1.30, preferably having a pKa ≤ 2.90, particularly preferably having a pKa ≤ -4.90 are used and
wherein
the acetic acid is present in amounts of 0.4 to 15.0 per cent by weight, with preference 0.5 to 10.0 per cent by weight, preferably 0.8 to 6.5 per cent by weight, particularly preferably in amounts of 1.0 to 6.0 per cent by weight, based on the reaction matrix,
wherein
the molar ratio of Bronsted acid used to acetic acid in the case of Bronsted acids of category A), which have a pKa ≤ -4.90, is in the range from ≥ 1/30 and ≤ 1/3 and in the case of Bronsted acids of category B), which have a pKa of ≤ -1.30 to ≥ -4.80, is in the range from ≥ 1/10 and ≤ 1 and
in the case of mixtures of Bronsted acids of category A) and category B) is in the range from ≥ 1/30 and ≤ 1, with the proviso that (i) either the sole use
of trifluoromethanesulfonic acid and acetic acid is excluded, and/or that (ii) the Bronsted acid used at least in part has a pKa between -1.3 and > -13.5,
wherein
the Bronsted acid is optionally at least partly provided in situ, preferably by use of a Bronsted acid salt-Bronsted acid combination, such as preferably aluminium triflate/methanesulfonic acid, bismuth triflate/methanesulfonic acid and/or sodium triflate/methanesulfonic acid and/or sodium triflate/sulfuric acid.

**11.** Process according to Claim 10 for preparing branched siloxanes bearing terminal acetoxy functions, **characterized in that** the component a) used is a branched silicone equilibrate bearing terminal alkoxy groups.

**12.** Process according to Claim 10 or 11 for preparing branched siloxanes bearing terminal acetoxy functions, **characterized in that** all components a) and/or b) and also optionally c) and possibly d) are initially charged and reacted together with acetic anhydride, Bronsted acid and acetic acid.

**13.** Process according to Claim 10 for preparing $\alpha,\omega$-diacetoxypolydimethylsiloxanes, **characterized in that** component c) is reacted, alone and/or optionally together with simple siloxane cycles, with acetic anhydride, Bronsted acid and acetic acid.

**14.** Process according to any of Claims 10 to 13, **characterized in that** it is conducted using a reaction system as defined in any of Claims 1 to 9.

**15.** Brønsted-acidic, end-equilibrated linear $\alpha,\omega$-acetoxy group-bearing siloxanes having chain lengths of more than 3 silicon atoms, having total cycles contents, defined as the sum total of the content fractions of the cyclic siloxanes comprising $D_4$, $D_5$ and $D_6$, based on the siloxane matrix and determined by gas chromatography after their derivatization to give the corresponding linear $\alpha,\omega$-isopropoxysiloxanes, of less than 20, preferably less than 13, particularly preferably less than 12 per cent by weight, preferably prepared by a process according to Claim 10 or 13-14.

**16.** Brønsted-acidic, end-equilibrated branched acetoxy group-bearing siloxanes having chain lengths of more than 3 silicon atoms, preferably prepared by a process according to Claim 10 to 12 or 14, **characterized in that** they have total cycles contents, defined as the sum total of the content fractions of the cyclic siloxanes comprising $D_4$, $D_5$ and $D_6$, based on the siloxane matrix and determined by gas chromatography after their derivatization to give the corresponding branched isopropoxysiloxanes, of less than 20, preferably less than 8, particularly preferably less than 7 per cent by weight.

**17.** Use of end-equilibrated acetoxy group-bearing siloxanes, prepared using a reaction system as defined in any of Claims 1 to 9 and in particular in accordance with at least one of Claims 10 to 14, for preparing polyethersiloxanes, especially for preparing polyurethane foam stabilizers, defoamers, paint additives, levelling additives and dispersing additives and/or demulsifiers.

**Revendications**

**1.** Système de réaction pour la préparation de siloxanes complètement équilibrés, portant des fonctions acétoxy, présentant des longueurs de chaîne supérieures à 3 atomes de silicium, comprenant

a) des silanes et/ou des siloxanes portant des groupes alcoxy et/ou
b) des silanes et/ou des siloxanes portant des groupes acétoxy et/ou
c) des silanes et/ou des siloxanes portant des groupes hydroxy et/ou
d) des cycles siloxane simples et/ou des cycles DT, ainsi que
e) un milieu réactionnel comprenant de l'anhydride de l'acide acétique, un acide de Brönstedt ainsi que de l'acide acétique,
des acides de Brönstedt présentant une valeur pKa $\leq$ - 1,30, de préférence une valeur pKa $\leq$ -2,90, de manière particulièrement préférée une valeur pKa $\leq$ -4,90 étant utilisés
et
l'acide acétique étant contenu dans le système de réaction en des quantités de 0,4 à 15,0% en poids, de préférence de 0,5 à 10,0% en poids, préférablement de 0,8 à 6,5% en poids, de manière particulièrement préférée en des quantités de 1,0 à 6,0% en poids, par rapport au système de réaction,
le rapport molaire des quantités d'acide de Brönstedt utilisé à acide acétique, pour des acides de Brönstedt de la catégorie A), qui présentent une valeur de pKa $\leq$ - 4,90, se situant dans la plage de $\geq$ 1/30 et $\leq$ 1/3 et
pour des acides de Brönstedt de la catégorie B), qui présentent une valeur de pKa de $\leq$ -1,30 à $\geq$ -4,80, se situant dans la plage de $\geq$ 1/10 et $\leq$ 1 et
pour des mélanges d'acides de Brönstedt de la catégorie A) et de la catégorie B) se situant dans la plage de $\geq$ 1/30 et $\leq$ 1,
étant entendu que soit (i) l'utilisation unique d'acide trifluorométhanesulfonique ainsi que d'acide trifluorométhanesulfonique et d'acide acétique est exclue et/ou que (ii) l'acide de Brönstedt utilisé présente au moins

partiellement une valeur pKa entre - 1,3 et > -13,5.

2. Système de réaction selon la revendication 1 pour la préparation de siloxanes ramifiés portant des fonctions acétoxy terminales, **caractérisé en ce qu'**un silane et/ou un siloxane portant des groupes alcoxy, contenant au moins un groupe T et/ou groupe Q et/ou un silane/siloxane portant des groupes acétoxy, contenant au moins un groupe T et/ou Q et/ou des cycles DT est/sont utilisé(s) .

3. Système de réaction selon l'une des revendications 1 ou 2, **caractérisé en ce que** des alcoxysilanes sont utilisés, de préférence des diméthyldialcoxysilanes, des méthyltrialcoxysilanes et/ou des esters d'acide ortho-alkylsilicique $Si(OR)_4$, avec R = un radical alkyle, un radical alkyle ramifié ou un radical cycloalkyle, comprenant 1 à 10 atomes de carbone, de préférence 1 à 4, de manière particulièrement préférée R = éthyle.

4. Système de réaction selon l'une des revendications 1 à 3, **caractérisé en ce que** des alcoxysiloxanes linéaires et/ou ramifiés sont utilisés, de préférence ceux de formule :

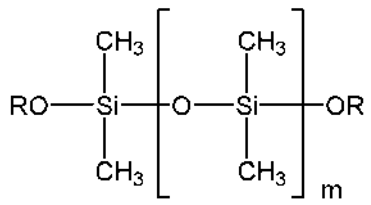

avec m = 1 à 300, de préférence 12 à 150, de manière particulièrement préférée m = 20 à 80 ou

$CH_3SiD_aD_bD_c\,(OR)_3$

ou

$SiD_aD_bD_cD_d\,(OR)_4$

avec a, b, c et d à chaque fois, indépendamment les uns des autres, 1 à 100, de préférence 2 à 50, de manière particulièrement préférée 10 à 30 et
R = un radical alkyle, un radical alkyle ramifié, un radical cycloalkyle comprenant 1 à 10 atomes de carbone, de préférence 1 à 4, de manière particulièrement préférée R = éthyle.

5. Système de réaction selon la revendication 4, les alcoxysiloxanes utilisés résultant de l'équilibrage acide de diméthyldialcoxysilanes ou de méthyltrialcoxysilanes présentant des cycles siloxane simples (comprenant en particulier $D_4$ et/ou $D_5$).

6. Système de réaction selon l'une des revendications 1 à 5, **caractérisé en ce que** des cycles siloxane simples sont utilisés, comprenant en particulier $D_3$ (hexaméthylcyclotrisiloxane), $D_4$ (octaméthylcyclotétrasiloxane), $D_5$ (décaméthylcyclopentasiloxane) et/ou $D_6$ (dodécaméthylcyclohexasiloxane), $D_4$ et/ou $D_5$ étant particulièrement préférés et $D_5$ étant le plus préféré.

7. Système de réaction selon l'une des revendications 1 à 6, **caractérisé en ce que** des silanes à fonctionnalité hydroxy et/ou des siloxanes à fonctionnalité hydroxy sont utilisés, de préférence du diméthylsilanol $(CH_3)_2Si(OH)_2$, du méthylsilanol ($CH_3Si(OH)_3$) et/ou de l'acide orthosilicique $Si(OH)_4$ et/ou, comme siloxanes à fonctionnalité hydroxy, de préférence des $\alpha,\omega$-polydiméthylsiloxanediols de la formule suivante :

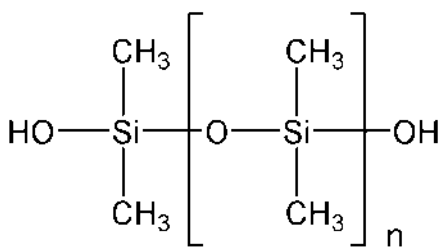

avec n = 1 à 300, de préférence n = 12 à 150, de manière particulièrement préférée n = 20 à 80 sont utilisés.

**8.** Système de réaction selon l'une des revendications 1 à 7, **caractérisé en ce que** des siloxanes cycliques-ramifiés du type DT sont utilisés, de préférence

j) des mélanges de siloxanes cycliques-ramifiés du type D/T, qui sont de préférence constitués de siloxanes présentant des motifs D et T, dont la proportion sous forme de somme, pouvant être déterminée par spectroscopie $^{29}$Si-RMN, des motifs D et T présents dans la matrice de siloxane, qui présentent des groupes Si-alcoxy et/ou SiOH, est ≤ 2% en mole, de préférence inférieure à 1% en mole et qui contiennent de préférence au moins 5% en poids de cycles siloxane, tels que de préférence l'octaméthylcyclotétrasiloxane ($D_4$), le décaméthylcyclopentasiloxane ($D_5$) et/ou leurs mélanges ou
jj) des mélanges de siloxanes cycliques-ramifiés, présentant des motifs D et T, dont la proportion sous forme de somme, pouvant être déterminée par spectroscopie $^{29}$Si-RMN, des motifs D et T présents dans la matrice de siloxane, qui présentent des groupes Si-alcoxy et/ou SiOH, est supérieure à 2 et inférieure à 10% en mole.

**9.** Système de réaction selon l'une des revendications 1 à 8, **caractérisé en ce que** l'acide de Brönstedt nécessaire pour le système de réaction est préparé au moins partiellement in situ, de préférence par utilisation d'une combinaison sel d'acide de Brönstedt-acide de Brönstedt dans le système de réaction, telle que de préférence triflate d'aluminium/acide méthanesulfonique, triflate de bismuth/acide méthanesulfonique et/ou triflate de sodium/acide méthanesulfonique et/ou triflate de sodium/acide sulfurique.

**10.** Procédé de préparation de siloxanes acides de Brönstedt, linéaires ou ramifiés, <u>complètement équilibrés</u> portant des fonctions acétoxy, présentant des longueurs de chaîne supérieures à 3 atomes de silicium, **caractérisé en ce que**

a) des silanes et/ou des siloxanes portant des groupes alcoxy et/ou
b) des silanes et/ou des siloxanes portant des groupes acétoxy et/ou
c) des silanes et/ou des siloxanes portant des groupes hydroxy et/ou
d) des cycles siloxane simples, en particulier comprenant $D_4$ et/ou $D_5$ et/ou des cycles DT sont transformés avec de l'anhydride de l'acide acétique, un acide de Brönstedt ainsi que de l'acide acétique,

dans lequel

des acides de Brönstedt présentant une valeur pKa ≤ 1,30, de préférence une valeur pKa ≤ 2,90, de manière particulièrement préférée une valeur pKa ≤ -4,90 sont utilisés et
dans lequel
l'acide acétique est contenu en des quantités de 0,4 à 15,0% en poids, de préférence de 0,5 à 10,0% en poids, préférablement de 0,8 à 6,5% en poids, de manière particulièrement préférée en des quantités de 1,0 à 6,0% en poids, par rapport à la matrice de réaction,
dans lequel
le rapport molaire des quantités d'acide de Brönstedt utilisé à acide acétique, pour des acides de Brönstedt de la catégorie A), qui présentent une valeur de pKa ≤ - 4,90, se situe dans la plage de ≥ 1/30 et ≤ 1/3 et
pour des acides de Brönstedt de la catégorie B), qui présentent une valeur de pKa de ≤ -1,30 à ≥ -4,80, se situe dans la plage de ≥ 1/10 et ≤ 1 et
pour des mélanges d'acides de Brönstedt de la catégorie A) et de la catégorie B), se situe dans la plage de ≥ 1/30 et ≤ 1,
étant entendu que soit (i) l'utilisation unique
d'acide trifluorométhanesulfonique et d'acide acétique est exclue et/ou que (ii) l'acide de Brönstedt utilisé présente au moins partiellement une valeur pKa entre-1,3 et > -13, 5,
dans lequel
l'acide de Brönstedt est éventuellement préparé au moins partiellement in situ, de préférence par utilisation d'une combinaison sel d'acide de Brönstedt-acide de Brönstedt, telle que de préférence triflate d'aluminium/acide méthanesulfonique, triflate de bismuth/acide méthanesulfonique et/ou triflate de sodium/acide méthanesulfonique et/ou triflate de sodium/acide sulfurique.

**11.** Procédé selon la revendication 10 pour la préparation de siloxanes ramifiés, portant des fonctions acétoxy terminales, **caractérisé en ce qu'**on utilise, comme composant a), un produit équilibré de silicone portant des groupes alcoxy

terminaux, ramifié.

**12.** Procédé selon la revendication 10 ou 11 pour la préparation de siloxanes ramifiés, portant des fonctions acétoxy terminales, **caractérisé en ce que** tous les composants a) et/ou b) ainsi qu'éventuellement c) et le cas échéant d) sont disposés au préalable conjointement avec de l'anhydride de l'acide acétique, un acide de Brönstedt ainsi que de l'acide acétique et sont transformés.

**13.** Procédé selon la revendication 10 pour la préparation d'$\alpha,\omega$-diacétoxypolydiméthylsiloxanes, **caractérisé en ce que** le composant c) est transformé seul et/ou le cas échéant conjointement avec des cycles siloxane simples avec de l'anhydride de l'acide acétique, de l'acide de Brönstedt ainsi que de l'acide acétique.

**14.** Procédé selon l'une des revendications 10 à 13, **caractérisé en ce qu'**il est réalisé avec utilisation d'un système de réaction tel que défini dans l'une des revendications 1 à 9.

**15.** Siloxanes acides de Brönstedt, complètement équilibrés, linéaires, portant des groupes $\alpha,\omega$-acétoxy, présentant des longueurs de chaîne supérieures à 3 atomes de silicium, qui présentent des teneurs totales en cycles, définies comme la somme des proportions des siloxanes cycliques comprenant $D_4$, $D_5$ et $D_6$ par rapport à la matrice de siloxane et déterminées par chromatographie en phase gazeuse après leur dérivation en $\alpha,\omega$-isopropoxysiloxanes linéaires correspondants, inférieures à 20, de préférence inférieures à 13, de manière particulièrement préférée inférieures à 12% en poids, de préférence préparés selon un procédé selon la revendication 10 ou 13-14.

**16.** Siloxanes acides de Brönstedt, complètement équilibrés, ramifiés, portant des groupes acétoxy, présentant des longueurs de chaîne supérieures à 3 atomes de silicium, de préférence préparés selon un procédé selon la revendication 10 à 12 ou 14, **caractérisés en ce qu'**ils présentent des teneurs totales en cycles, définies comme la somme des proportions des siloxanes cycliques comprenant $D_4$, $D_5$ et $D_6$ par rapport à la matrice de siloxane et déterminées par chromatographie en phase gazeuse après leur dérivation en isopropoxysiloxanes ramifiés correspondants, inférieures à 20, de préférence inférieures à 8, de manière particulièrement préférée inférieures à 7% en poids.

**17.** Utilisation de siloxanes complètement équilibrés, portant des groupes acétoxy, préparés avec utilisation d'un système de réaction tel que défini dans l'une des revendications 1 à 9, en particulier selon au moins l'une des revendications 10 à 14, pour la préparation de polyéthersiloxanes, en particulier pour la préparation de stabilisants de mousse de polyuréthane, d'antimousses, d'additif de vernis, d'étalement et de dispersion et/ou de désémulsifiants.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 1039516, Bailey
- US 4066680 A
- EP 3611215 A1
- EP 3492513 A1


### In der Beschreibung aufgeführte Nicht-Patentliteratur


- **R. MINKWITZ ; T. HERTEL.** *Z. Naturforsch. B,* vol. 52 (10), 1283-1286
- **S. BRUCKENSTEIN ; I. M. KOLTHOFF.** *J. Am. Chem. Soc.,* 1956, vol. 78 (1), 10
- **G. W. CESKA ; E. GRUNWALD.** *J. Am. Chem. Soc.,* 1967, vol. 89 (1371), 1377
- **N. GIGANT.** *Synlett,* 2013, vol. 24, 0399-0400
- **J. POLA et al.** *Collect. Czech. Chem. Commun.,* 1974, vol. 39 (5), 1169-1176
- Methods of Organic Chemistry. **W. SIMMLER ; HOUBEN-WEYL.** O-Metal Derivates of Organic Hydroxy Compounds. vol. VI/2, 162
- **BENET L.Z. ; GOYAN J.E.** Potentiometric determination of dissociation constants. *J. Pharm. Sci.,* 1967, vol. 56, 665-680
- **J. POLA et al.** *Collect. Czech. Chem. Commun.,* 1974, vol. 39 (5), 1169-10